(19) Europäisches Patentamt

European Patent Office

Office européen des brevets

(11) **EP 1 483 489 B1**

(12) **FASCICULE DE BREVET EUROPEEN**

(45) Date de publication et mention
de la délivrance du brevet:
**18.10.2006 Bulletin 2006/42**

(21) Numéro de dépôt: **02797995.4**

(22) Date de dépôt: **29.08.2002**

(51) Int Cl.:
***F02C 5/12*** *(2006.01)*

(86) Numéro de dépôt international:
**PCT/FR2002/002956**

(87) Numéro de publication internationale:
**WO 2003/023206 (20.03.2003 Gazette 2003/12)**

(54) **TURBINE A GAZ AVEC COMBUSTION INTERMITTENTE**

GASTURBINE MIT INTERMITTIERENDER VERBRENNUNG

GAS TURBINE WITH INTERMITTENT COMBUSTION

(84) Etats contractants désignés:
**AT BE BG CH CY CZ DE DK EE ES FI FR GB GR
IE IT LI LU MC NL PT SE SK TR**

(30) Priorité: **07.09.2001 FR 0111601**

(43) Date de publication de la demande:
**08.12.2004 Bulletin 2004/50**

(73) Titulaire: **Macarez, Bernard
64290 Lasseube (FR)**

(72) Inventeur: **Macarez, Bernard
64290 Lasseube (FR)**

(56) Documents cités:
**EP-A- 0 109 957      WO-A-80/02444
WO-A-98/12427       DE-A- 2 229 582
DE-A- 2 646 248       DE-B- 1 218 218
FR-A- 1 006 375       FR-A- 1 131 310
US-A- 2 054 081       US-A- 2 888 803
US-A- 3 877 219**

## Description

Ce document décrit le dessin, le principe et le fonctionnement d'un moteur à chambres de combustion totalement isochore impulsionnelles : le pulsomoteur **1** objet de l'invention.

## 1.INTRODUCTION

Au cours des vingt dernières années les turbines à gaz ont vainement tenté de supplanter les moteurs à combustion alternatifs en termes de consommation spécifique. Dans ces moteurs alternatifs l'admission, la compression, la combustion et la détente s'effectuent dans une même chambre dont le volume varie grâce au mouvement du piston. Cette combustion s'effectue en partie à volume constant, en partie à pression constante, et parfois suivant une isotherme en fin de combustion en début de détente. Le pulsomoteur **1** détend des gaz à haute température (2500 °K environ) et à haute pression (50 à 60 Bars dans l'exemple proposé) produit à partir d'une combustion effectuée à volume constant. À même surface de cycle dans le champ enthalpie-entropie, en déplaçant le diagramme du cycle vers les zones de hautes pressions ont réduit l'accroissement relatif d'entropie ce qui améliore le rendement du cycle et diminue la consommation spécifique de carburant de la machine thermique. L'architecture de construction du pulsomoteur **1** s'applique à n'importe quelle application motrice qu'elle soit aéronautique, terrestre ou marine.

## ÉTAT DE LA TECHNIQUE ANTÉRIEURE

De nombreuses tentatives ont été tentées depuis les années 1930 pour utiliser la combustion à volume constant (combustion isochore) dans une turbine à gaz pour améliorer la consommation de carburant. On distingue deux types de solutions : la combustion partiellement isochore et celles totalement isochores. Les premières n'ont des clapets que du côté de l'entrée d'air des chambres. Les secondes ont des clapets à l'entrée et à la sortie des chambres.

Certains auteurs ont proposé des solutions de combustion partiellement isochore basées sur le dessin du pulsoréacteur tel que proposé par Paul Schmidt en 1934 ou encore le pulsoréacteur ARGUS AS109-104 et le Fi 103s utilisé sur les VI en 1939-1945. Les combustions étaient partiellement isochores car seules les entrées d'air des chambres de combustion étaient dotées de clapets permettant de renouveler la charge d'air après combustion. En aval de ces chambres, on trouvait des tuyères de détente pour réacteur. Plus récemment les brevets US 3 877 218 A (HAGEN HERMANN 15/4/1975) et US 2 888 803 A (LEMUEL PN 02/06/1959) ont repris ce principe de combustion partiellement isochore pour l'introduire dans l'architecture d'une turbine à gaz.

D'autres auteurs ont proposé des solutions pour effectuer une combustion totalement isochore dans l'architecture des turbines à gaz. Par exemple les brevets DE 12 18 218 B (EUGEN GROEGER DR ING) 2 juin 1966 (1966-06-052) et le brevet FR-A-1 131 310 (CANARELLI PIERRE) 20 Février 1957 (1957-02-20). Ces brevets montrent des chambres de combustion avec des portes à l'entrée d'air et à la sortie des gaz permettant d'effectuer des combustions totalement isochores. On trouve des cycles comprenant une phase de remplissage ou admission des chambres, une phase de combustion, une phase de détente ou phase de vidange des chambres et parfois une phase supplémentaire de balayage pour leur refroidissement.

Cependant à l'exception des pulsoréacteurs Argus et V1 aucun des brevets précédemment cités n'ont débouché sur des applications industrielles. Les principales raisons de cette absence de développement sont que les portes ou clapets situés à l'entrée et à la sortie des chambres pour gérés les flux d'air entrant et de gaz sortants étaient entraînés par des mécanismes reliés à l'arbre principal de puissance des machines ou au mieux ils étaient entraînés par des moteurs électriques qui assuraient la puissance motrice nécessaire aux commandes de ces clapets. Ces brevets ne prenaient pas en compte les conditions aérodynamiques en amont des chambres (ligne de pompage du compresseur) et en aval avec un blocage sonique au col du distributeur de la turbine qui limite le débit de sorite de ces chambres. Ces brevets présentaient les problèmes suivants :

1. La fréquence et la durée d'ouverture et de fermeture des portes ou clapets 6 étaient directement proportionnelles à la vitesse de rotation des arbres moteurs d'une part D'autre part il n'était pas possible d'augmenter à un instant donné le nombre de clapets à ouvrir ou à fermer II s'agissait de systèmes dépendants ou systèmes linéaires tels qu'on les définit en langage mathématique.

2. Les conditions aérodynamiques amont et avale des chambres n'étaient pas prises en compte dans le dessin des moteurs. Par exemple le brevet DE 12 18 218 B propose des disques comportant des ouvertures pour permettre le remplissage et la vidange des chambres. Ce système ne permet pas d'augmenter instantanément la surface d'ouverture de passage d'air ou de gaz en fonction des débits résultant de l'augmentation de vitesse moteur. En effet accroître la rotation du disque n'agrandit pas la surface des trous de passage à un instant donné. Les conditions aérodynamiques en amont des chambres nécessitent de contrôler la marge au pompage du compresseur et les conditions en aval des chambres, en particulier le col sonique des distributeurs des turbines, conditionnent les durées de vidange des chambres. Si, pour les pulsoréacteurs, cela ne présente pas de problèmes importants, il n'en est pas de même pour les turbines à gaz.

3. Compte tenu des hautes pressions rencontrées en fin de combustion dans les chambres certains clapets auraient nécessité des puissances énormes pour commander leur ouverture ou fermeture

4. Aucune solution n'était apportée pour le refroidissement des parois soumises aux très fortes températures de combustion stoechiométriques.

La solution technique proposée dans ce dépôt de brevet apporte des solutions à ces problèmes.

**DESCRIPTON**

## 21. DESCRIPTION - PRINCIPE DE FONCTIONNEMENT

Le pulsomoteur **1** : Il s'agit d'une turbo-machine (compresseur **25** axial ou centrifuge + turbines **21** ou **22** axiales ou radiales à action ou à réaction)

- dont la combustion s'effectue à volume constant. Production de gaz à haute température (2500 °K environ) et à haute pression (50 à 60 Bars dans l'exemple présenté) dans des chambres **16** à volume constant.

- dont les étages de turbine **21** ou **22** sont alimentés par un régime pulsé à haute pression

- qui nécessite peu de refroidissement (similaire aux turbines à gaz)

- dont l'architecture de construction similaire à celle de la turbine à gaz s'applique à n'importe quel type de moteur aéronautique, terrestre ou marine.

À même puissance, sa consommation spécifique et le débit d'air transvasé sont plus faibles que ceux des turbines à gaz.

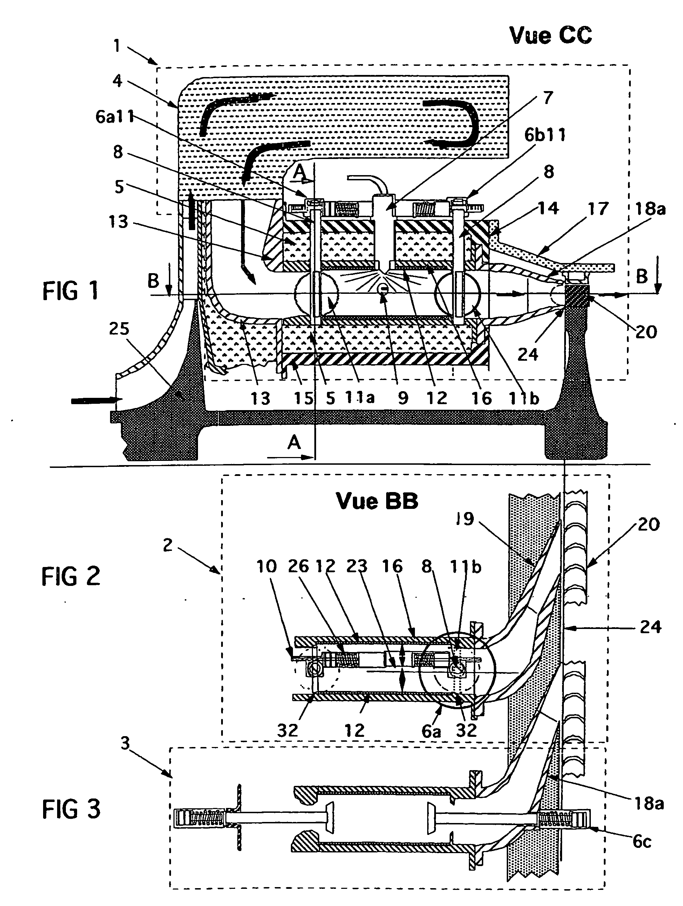

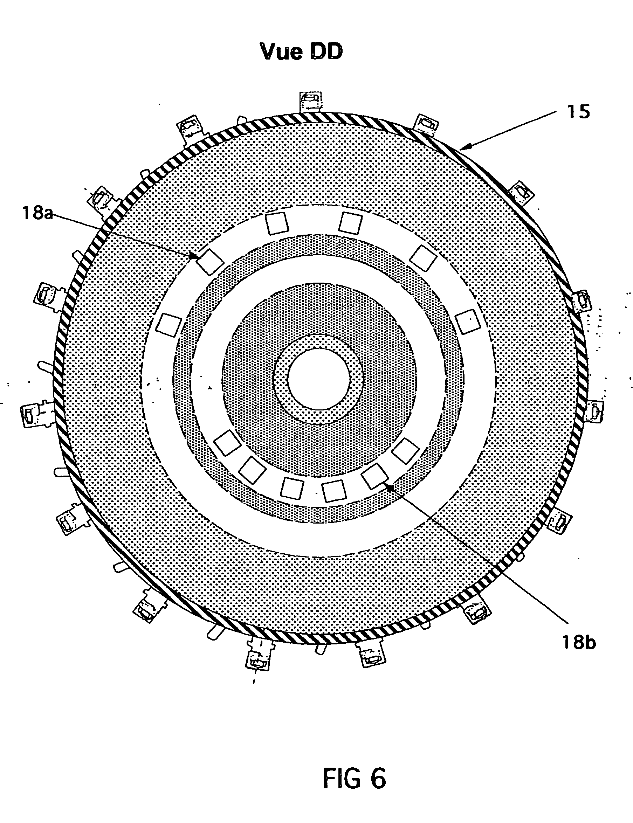

## REFERENCES UTILISEES DANS LES DESSINS FIGURES 1 à 8

Ces dessins représentent un exemple de pulsomoteur **1** comportant 15 chambres : 5 groupes **27,28,29,30,31** de 3 chambres **16** pour un cycle à 3 phases : admission, combustion, détente.

## REFERENCES

**1** exemple de pulsomoteur

**2** Ensemble clapet électromagnétique à papillon -Système 1

**3** Clapet ou clapet électromagnétique à soupape -Système **2**

**4** Echangeur situé entre la sortie compresseur et l'entrée chambre

**5 Isolant**

**6** Ensemble clapet électromagnétique ou commande de clapet (ou valve,ou soupape)

- indice **a** côté entrée d'air des chambres) **6a**
- Indice **b** côté sortie gaz des chambres **6b**
- Le premier nombre est le numéro du groupe de 3 chambres (pour cet exemple à 3 phases par cycle)
- Le deuxième nombre est le numéro de la chambre dans le groupe

Exemples : groupe **27**

> **6a11** Clapet electromagnetique entrée d'air chambre numéro 1 du 1° groupe **-27**
> **6a12** Clapet electromagnetique entrée d'air chambre numéro 2 du 1° groupe **-27**
> **6a13** Clapet electromagnetique entrée d'air chambre numéro 3 du 1° groupe**-27**
> **6a21** Clapet electromagnetique entrée d'air chambre numéro 1 du 2° groupe **-28**
> **6a22** Clapet electromagnetique entrée d'air chambre numéro 2 du 2° groupe **-28**
> **6a23** Clapet electromagnetique entrée d'air chambre numéro 3 du 2° groupe **-28**
> **6a31** Clapet electromagnétique entrée d'air chambre numéro 1 du 3° groupe **-29** etc...
> **6b11** Clapet electromagnétique sortie gaz chambre numéro 1 du 1° groupe **-27**
> **6b21** Clapet electromagnétique sortie gaz chambre numéro 2 du 1° groupe **-27**
> **6b31** Clapet electromagnétique sortie gaz chambre numéro 3 du 1° groupe **-27**
> **6b21** Clapet electromagnétique sortie gaz chambre numéro 1 du 2° groupe **-28**
> **6b22** Clapet electromagnétique sortie gaz chambre numéro 2 du 2° groupe **-28**
> **6b23** Clapet electromagnétique sortie gaz chambre numéro 3 du 2° groupe **-28**
> **6b31** Clapet electromagnétique sortie gaz chambre numéro 1 du 3° groupe **-29** etc.

**7** Ensemble pompe et module d'injection de carburant

**8** Axe des papillons des clapets électromagnétiques **6a** ou **6b**

**9** Système d'allumage par étincelle ou apport de chaleur -ex. :bougie

**10** Crémaillère

**11** papillon entré d'air : indice **a** et papillon de sortie des gaz : indice **b**

12 Céramique ou matériau similaire d'isolation

**13** Carter chambre côté entrée d'air

**14** Carter chambre côté sortie gaz

**15** Carter pulsomoteur

**16** chambre **16**$_{11}$-chambre 1 du 1° groupe chambre **16**$_{12}$-chambre 2 du 1° groupe etc..

**17** Carter étage turbine

**18a** Distributeur turbine sonique: étage turbine fonctionnant à 20 000 tr/mn (ex)

**18b** Distributeur turbine sonique: étage turbine fonctionnant à 40 000 tr/mn (ex)

**19** Distributeur turbine supersonique (ex)

**20** Pales Turbine

**21** Turbine ou Roue de turbine fonctionnant à 40,000 tr/mn comme exemple

**22** Turbine ou Roue de turbine fonctionnant à 20,000 tr/mn comme exemple

**23** Désalignement de l'axe des papillons des clapets électromagnétiques

**24** Lieu de la pression Px au col du distributeur turbine et influant sur les durées de vidange des chambres

**25** Ensemble compresseur

**26** Ressort

**27** Premier groupe de 3 chambres (pour cet exemple à 3 phases par cycle)

**28** Deuxième groupe de 3 chambres (pour cet exemple à 3 phases par cycle)

**29** Troisième groupe de 3 chambres (pour cet exemple à 3 phases par cycle)

**30** Quatrième groupe de 3 chambres (pour cet exemple à 3 phases par cycle)

**31** Cinquième groupe de 3 chambres (pour cet exemple à 3 phases par cycle)

**32** Chanfrein

**SIGLES**

PCE        Pulse Combustion Engine - Pulsomoteur

THP :      Turbine haute pression

TL :        Turbine libre de puissance

DTHP :    Distributeur Turbine Haute Pression

**FIGURES 1 à 8**

Figure 1 : Vue de coupe CC de l'ensemble moteur avec échangeur

Figure 2 : Vue partielle de la coupe BB - système 1 avec exemple de clapets papillons commandés par moteur électromagnétique

Figure 3 : Vue partielle de la coupe BB - système 2 avec exemple des soupapes commandées par moteur électromagnétique

Figure 4 : Vue de coupe AA du pulsomoteur

Figure 5 : Vue de coupe CC de l'ensemble moteur pour 2 exemples de vitesse de rotation 20000 et 40000 tr/mn

Figure 6 : Vue de coupe des sorties distributeurs de turbine pour les exemples à 20000 et 40000 tr:/mn

Figure 7 : Vue de coupe CC de l'ensemble moteur sans échangeur

Figure 8 : Vue de détail des systèmes de clapets papillons à commande électromagnétiques - Système 1 et 2

**2. PULSOMOTEUR**

**2.1 Description - Principe de fonctionnement**

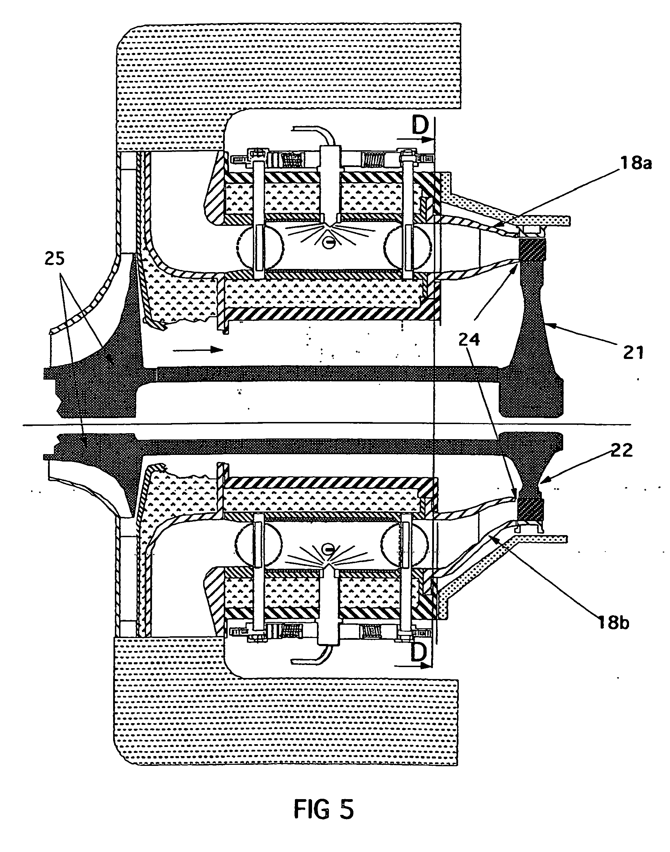

Les **figures 1 à 8** ci-jointes fournissent les dessins du pulsomoteur **1** pour **2** vitesses de rotation d'arbre de 20 000 tr/mn et 40 000 tr/mn.**(Fig. 5)**

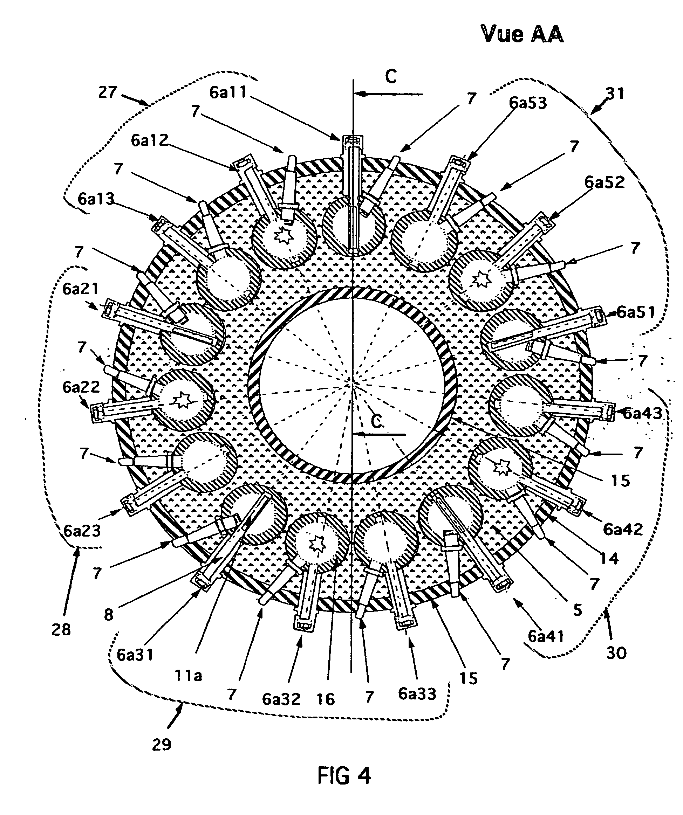

Le pulsomoteur **1** nécessite au minimum 3 chambres **16** identiques , mais en pratique il sera équipé de plusieurs groupes de 3 chambres (3, 6,.....15,18 chambres etc...) **Fig 4**. Toutes les chambres **16** sont identiques quel que soit le nombre de groupes. Dans chaque groupe, chaque chambre **16** effectue les 3 phases du cycle suivant : *admission, combustion, détente* dans cet ordre à la fréquence *fx*.

La fréquence *fx* de fonctionnement d'une chambre **16** est égale à l'inverse de la période totale *Tx* et donc égale à la somme des durées des phases (ici un exemple de 3 phases)

$$Tx = \text{temps admission} + \text{temps combustion} + \text{temps détente.} = 1/fx$$

*Tadm = durée de remplissage de la chambre = 1/fadm*
*Tcomb = durée de la combustion*
*Tdét = durée de vidange de la chambre*

Pour 1 groupe de 3 chambres, on a donc successivement et concomitamment les situations suivantes : exemple pour le groupe **27**

| La chambre 1 du 1° groupe 27 est en phase | | | *admission    combustion    détente* |
|---|---|---|---|
| La chambre 2 | " | " | *combustion    détente    admission* |
| La chambre 3 | " | " | *détente    admission    combustion* |
| La chambre 1 | " | " | *admission    combustion    détente    etc...* |

Et ainsi pour chaque groupe.

Plusieurs groupes de 3 chambres permettent diverses *Harmonisations ;(décalages des instants d'ouvertures/ fermetures des groupes de chambres les uns par rapport aux autres)* correspondant à diverses perméabilités du compresseur **25** et donc à diverses lignes de fonctionnement possibles dans le champ compresseur **25**.

Le débit permanent d'air sortant du compresseur **25** est ainsi transformé en débit de gaz pulsé fourni aux turbines **21** ou **22.** Le principe consiste donc à faire "tourner"un cycle (admission, combustion et détente) dans des chambres **16** immobiles à une certaine fréquence (*fx* = 50 à 150 Hz) d'une part et d'autre part de gérer les temps d'ouverture des clapets **6a** et **6b** des chambres **16** des groupes de telle sorte que le compresseur **25** "voit" toujours simultanément une ou plusieurs chambres **16** ouvertes en phase d'admission, préservant ainsi la marge au pompage du compresseur **25.** Les seuls éléments en mouvement sont les dispositifs **6a** et **6b** d'ouverture et de fermeture rapide des chambres.(Clapets/papillons)

**2,2 Temps caractéristiques**

Un moteur à piston fonctionnant à 5000 tr/mn effectue 1 tour moteur en 12 ms environ, les durées d'ouverture et de fermeture des soupapes (admission ou échappement) sont très faibles (environ 2 ms). Pour ce type de moteur, la combustion se réalise entre -10° avant PMH et + 40° après PMH. (PMH = Point Mort Haut) soit 50°, soit encore 1,7 ms environ.

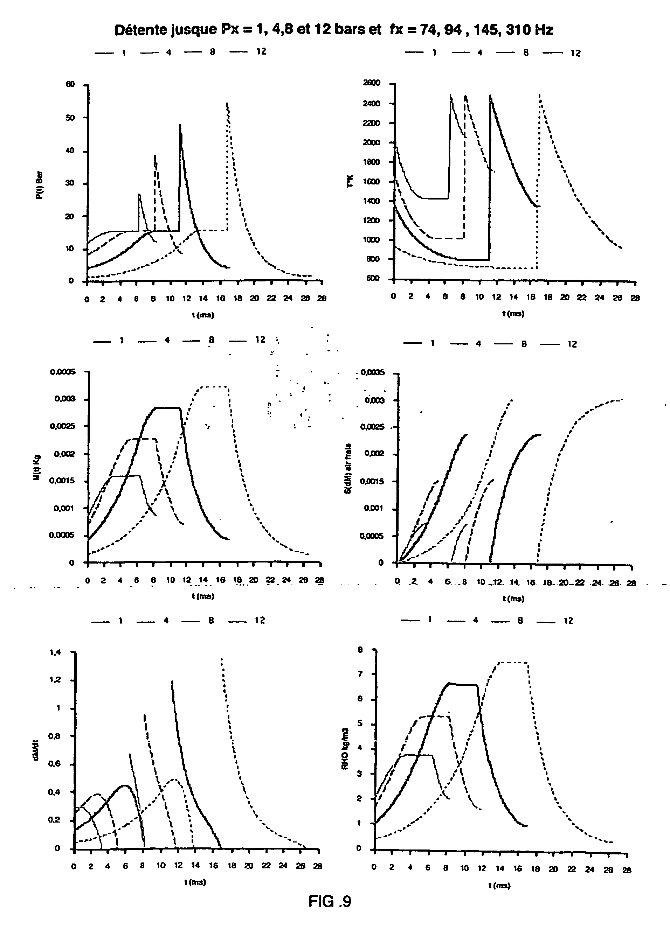

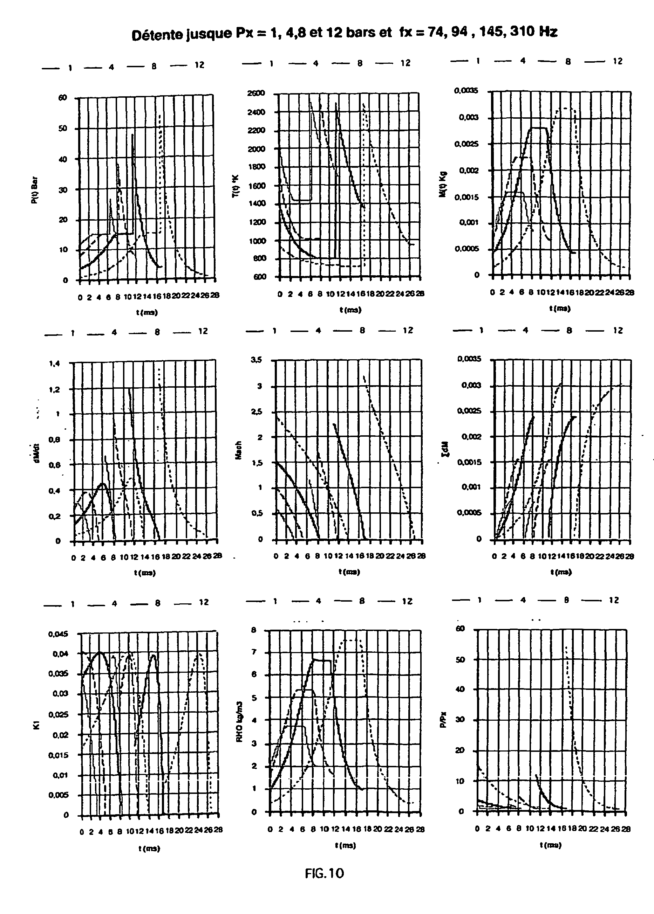

Les temps d'ouverture et de fermeture des clapets **6a** et **6b** des chambres **16** impulsionnelles seront donc de l'ordre de 2 à 3 millisecondes. Dans nos calculs **(figures 9** et **10)** nous avons supposé une durée de combustion complète de 3 ms. L'annexe de calcul et les courbes ci-jointes donnent une première approximation des temps caractéristiques de remplissage (*admission*) et de vidange (*échappement*) des chambres ainsi que les fréquences **fx** résultantes. En toute rigueur pour dimensionner correctement les chambres, il est nécessaire de disposer d'une loi de dégagement de chaleur et d'un modèle d'échange thermique instationnaire aux parois tels qu'on les trouve maintenant chez les constructeurs de moteurs alternatifs (ex. : lois de Vibe et Woschny). Cependant cela n'est pas nécessaire pour un premier calcul de fréquence fx de cycle.

**2,3 Fréquence fx et pression Px**

Pour une pression maxi obtenue dans la chambre (55 bars pour P/P= 15,5 bars de l'ensemble proposé) la durée de vidange de cette chambre dépend du niveau de pression statique ***Px* 24** au col du distributeur **18** THP situé à la sortie de la chambre.( ***Px*** champ de pression statique situé **24** entre la sortie du distributeur **18** et l'entrée de la roue **21** ou **22** de turbine).

La masse d'air frais admissible dans la chambre dépend de la masse résiduelle de gaz non détendue restant dans la chambre. Cette masse résiduelle dépend de la durée de la détente et donc de la pression Px **24.** Plus longue sera la détente plus faible sera la masse résiduelle de gaz dans la chambre après cette détente. Pour un volume V de chambre donné la pression Maxi de fin de combustion sera d'autant plus importante que la masse d'air et la masse de carburants admissibles seront grandes. Pour une pression d'alimentation en air donné et supposé constant (sortie compresseur **25),** la machine sera d'autant plus performante que les chambres seront capables de se vider rapidement (détente rapide) et complètement. Ce qui nécessite de réduire les pertes de toutes sortes qui s'opposeraient à cette détente. En régime permanent, une pression **Px 24** "s'installera" entre la sortie du distributeur **18** et l'entrée de la première roue **21** ou **22** de turbine et régulera le processus. Lorsque la fréquence fx augmentera la pression Px **24** devrait augmenter et donc augmenter la masse résiduelle dans les chambres. C'est-à-dire réduire la masse vidangée au cours de la détente, donc réduire la masse d'air frais admissible et ainsi réduire la puissance disponible. Il faudra rechercher l'optimum de fonctionnement c'est-à-dire quelle est la Px qui autorise le débit d'air maxi.

La pression Px **24** est une donnée expérimentale difficile à évaluer à partir d'un simple calcul. Les calculs ont donc été effectués pour plusieurs hypothèses de champ de pression Px **24** (1,4,8 et 12 Bars) donnant des fréquences fx respectivement de 74,94 145 et 310 Hz **figures 9** et **10** (hypothèse d'une durée de combustion Tcomb = 3 ms).

## 2,4 HARMONISATION

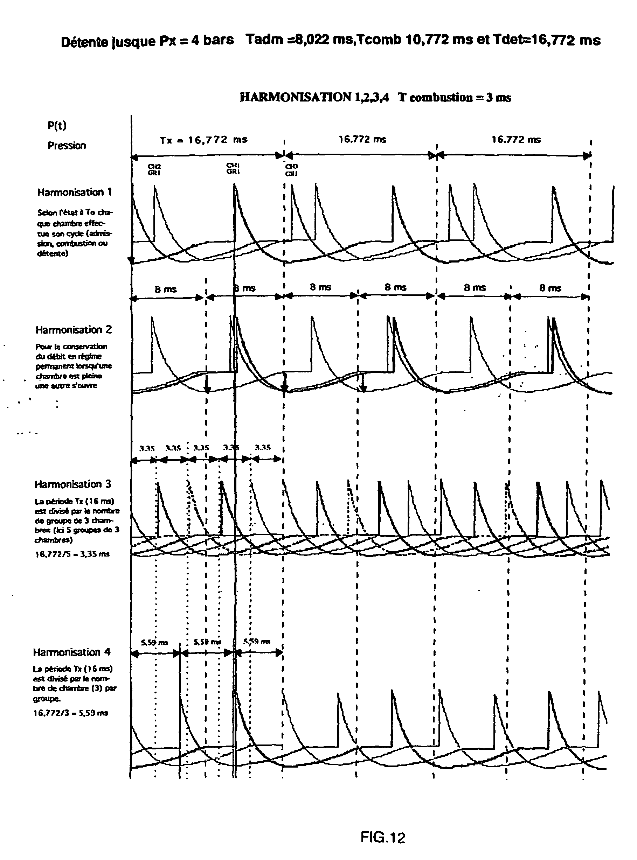

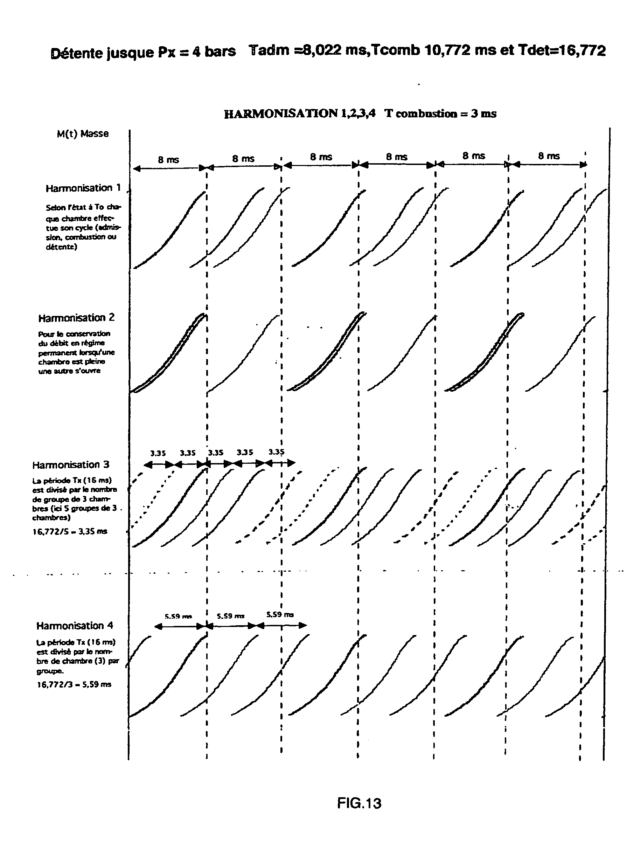

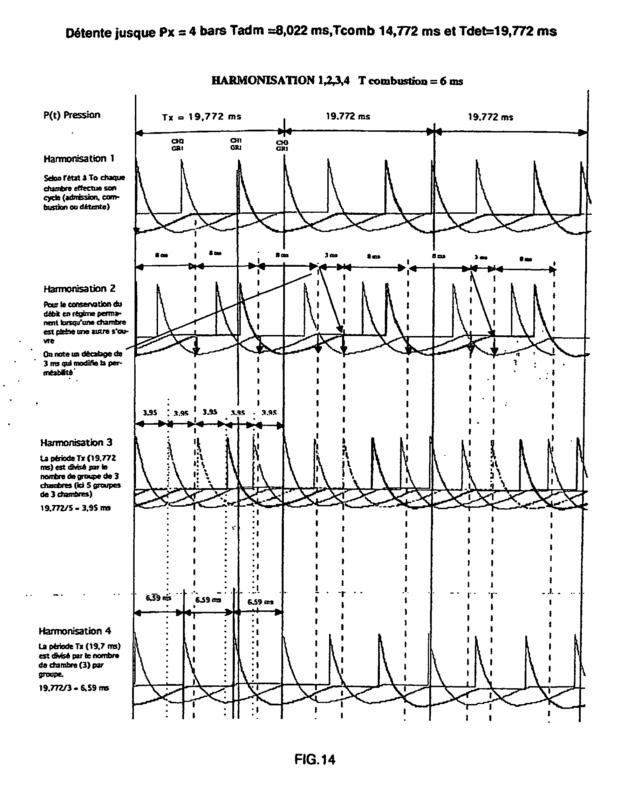

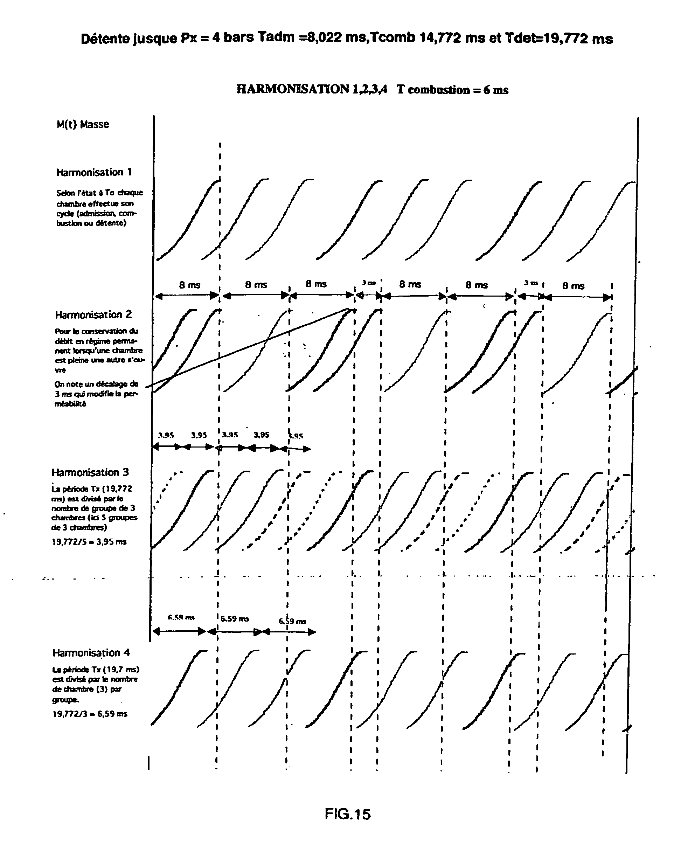

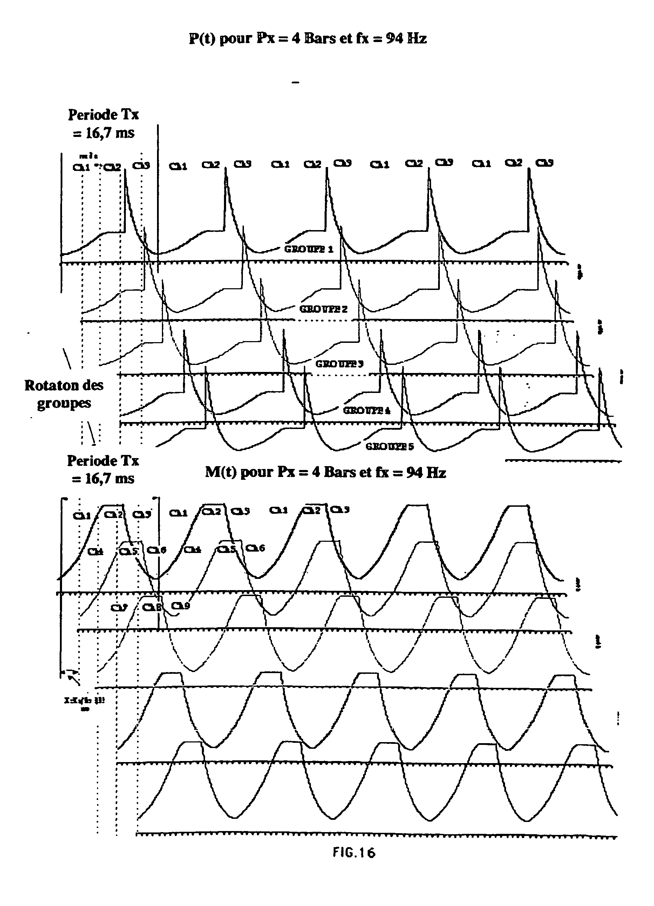

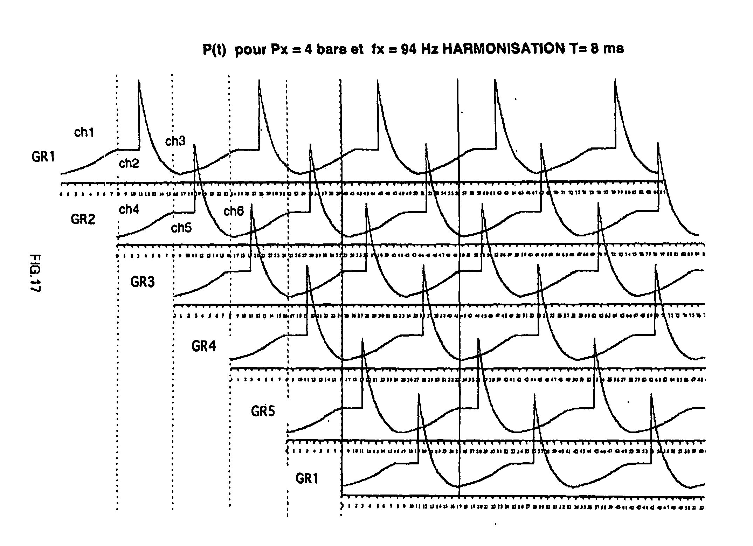

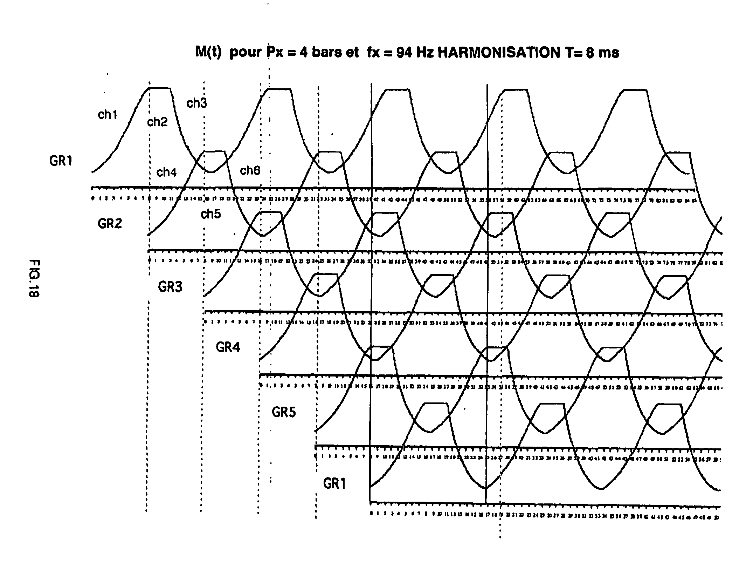

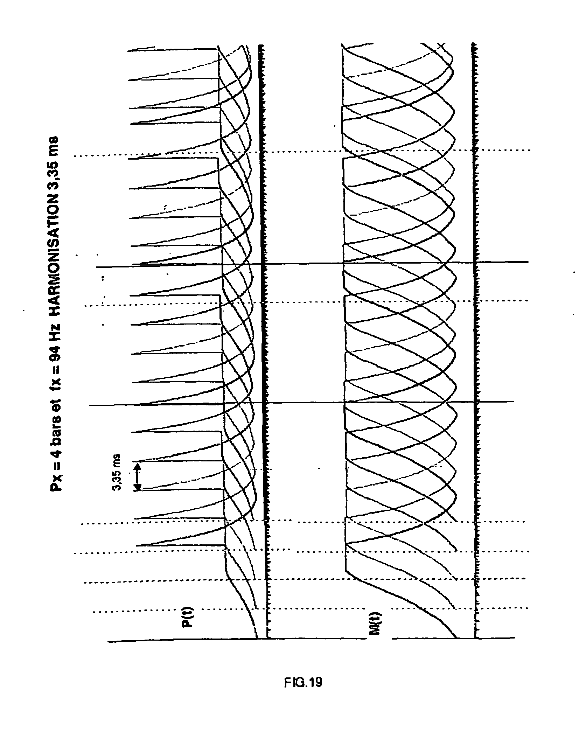

Il est possible d'"'Harmoniser" le fonctionnement des groupes **27** à **31** dans l'exemple présenté de 3 chambres, de différentes manières. (Voir **figures 12** à **19).** Lorsqu'il y a plusieurs groupes de 3 chambres pour que le débit d'air sortant du compresseur **25** demeure permanent, on harmonise les ouvertures des chambres de telle sorte qu'au moins une chambre **16** en phase d'admission d'un groupe (exemple groupe **27**) s'ouvre dès qu'une précédente du même groupe 27 ou d'un autre groupe (exemple groupe **28** ou **29**) en phase d'admission également, se ferme.Ceci revient à contrôler la perméabilité ou la ligne de fonctionnement dans le champ compresseur **25,** mais plusieurs adaptations sont possibles

### 2.4.1 Harmonisation 1

Chaque chambre **16** d'un groupe (exemple groupe **27**) effectue son propre cycle en commençant par une des phases Admission-combustion/détente. Ceci peut conduire à une perméabilité variable et à une ligne de fonctionnement fluctuante. Un décalage peut s'installer entre les ouvertures des groupes **27** à **31** de chambres **16.** Si le régime de fonctionnement est à Px=4 bars, on aura par exemple une ouverture chambre possible tous les 8 ms.

### 2.4.2 Harmonisations 2

Lorsqu'une chambre **16** du groupe (exemple groupe **27)** est remplie une autre du groupe groupe **29** ou groupe **30** s'ouvre (on cherchera à situer cette chambre le plus loin possible de la première. Si la chambre **16a11** du groupe **27** se ferme on ouvrira la chambre **16a31** du groupe **29** ou la chambre **16a41** du groupe **30 - Fig 4).** Cette harmonisation est proche de la précédente, mais on accepte de retarder l'ouverture d'une chambre en fin de combustion par exemple pour éviter l'opposition admission-détente. La chambre aura terminé son processus de combustion, mais restera fermée plus que nécessaire. Cette harmonisation donne également un type de fonctionnement fluctuant.

### 2.4.3 Harmonisations 3

La période Tx = 1/fx est divisée par le nombre de groupe (ici 5 groupes dans notre exemple) et on impose une ouverture de chambre toutes les Tx/5 (avec une gestion à azimut 180° voir exemple précédent ). Dans notre cas à Px = 4 bars, cela signifie qu'on ouvre une chambre d'admission tous les 3,35 ms.

### 2.4.4 Harmonisation 4

La période Tx = 1/fx est divisée par le nombre de chambres par groupe (ici 3 chambre par groupe dans l'exemple présenté) et l'on impose une ouverture de chambre (sans gestion à azimut 180°) toutes les Tx/3. Dans notre cas à Px = 4 bars, cela signifie qu'on ouvre une chambre d'admission toutes les 5,59 milisecondes Dans ce cas chaque groupe est indépendant et l'on ouvre le clapet **6a11** par exemple d'admission de la chambre **16a11** du même groupe **27** qui vient de terminer sa détente (c'est-à-dire Px=4 bars dans notre exemple) alors que 2 chambres "plus loin" une autre chambre **6a13** du groupe **27** débute la détente. Cette harmonisation permet de fonctionner au ralenti avec un nombre restreint de groupes les autres étant inactifs.

## 2.5 PILOTAGE

Le système est piloté à partir des mesures de pression entrée et sortie chambre (Px) **24** avec un objectif d'optimisation des ouvertures et fermetures des papillons **6** de telle sorte que la pression maxi dans les chambres soit la plus élevée possible à chaque cycle, c'est-à-dire que la quantité d'air introduit sera maximale (on note ici l'intérêt d'un intercooler). Le débit de carburant sera ajusté en fonction de cette masse d'air ou du débit d'air de la machine. Par groupe de 3 chambres, il y a simultanément une chambre en phase d'admission (EO - entrée Ouverte, Sortie fermée SF), la seconde chambre (EF, SF) et la troisième (EF, SO). On peut imaginer des phases de balayage (EO, SO) à vérifier au cours de l'expérimentation car il y a risque d'un flux inverse si la pression **24** de sortie n'est pas suffisamment détendue (inférieure à la pression sortie compresseur **25).**

## 2.6 FONCTIONNEMENT DANS LE CHAMP COMPRESSEUR

Les durées de fermeture des vannes antipompage de compresseur actuel sont de l'ordre de 200 à 300 millisecondes. Ce qui représente plusieurs cycles d'Admission, Combustion, Détente dont la durée varie 8 à 30 millisecondes. Suivant le type d'harmonisation choisie, la ligne de fonctionnement se déplacera dans le champ compresseur **25**. La ligne de fonctionnement se rapprochera ou s'éloignera de la ligne de pompage en fonction de la perméabilité offerte au compresseur **25**. Il peut ne pas s'agir d'une ligne de fonctionnement unique mais d'un champ de lignes se déplaçant dans le champ compresseur **25** comme on les rencontre dans le fonctionnement des turbocompresseurs de moteur diesel suralimenté. Le système permet une totale flexibilité dans la mesure où il sera également possible de modifier le nombre de groupe de 3 chambres en fonctionnement lorsque le débit sortie compresseur **25** diminuera par exemple. On peut décider de fonctionner avec 3 groupes sur 5.

## 3. ARCHITECTURE

Le pulsomoteur **1** est comparable à un turbomoteur classique à l'exception des chambres de combustion impulsionnelles et des premiers étages de turbine HP **21** ou **22**. Les chambres ont un fonctionnement essentiellement transitoire et instationnaire. Elles génèrent des impulsions de gaz à haute température et pression qui se détendent dans les étages des turbines **21** ou **22**. Entourées d'une forte épaisseur d'isolant **5** elles sont supposées adiabatiques. Le compresseur **25** est de construction conventionnelle (axiaux, centrifuges, axialo-centrifuges ou bi-centrifuge).Les premiers étages de turbine **21** ou **22** haute pression disposeront de distributeur **18** et de roue **21** ou **22** de turbine adaptées pour prendre mieux en compte l'aspect impulsionnel de la détente, turbines à action ou à réaction axiales ou radiales. Un premier étage supersonique **19** est possible.

La forme des chambres de combustion peut être cylindrique ou sphérique ou autre Les distributeurs **18** peuvent être de forme carrée, ronde ou autre.

### 3.1 INTERCOOLER

L'ajout d'un intercooler **4** (air-air ou air-eau ou air/huile) est possible ,il s'agit d'une option qui améliore la puissance de la machine en augmentant les masses d'air introduites dans les chambres **16.** S'il s'agit d'une application aéronautique l'intercooler **4** pourra utiliser le "RAM effect" (recovery air Mach number)

### 3.2 COMBUSTION

Il s'agit d'une combustion isochore (à volume constant).Par rapport à d'autres cycles thermodynamiques (isobare, isotherme)à même surface de cycle dans le champ enthalpie - entropie (c'est-à-dire à même quantité de "chaleur" échangée), la combustion isochore déplace le diagramme du cycle vers les zones de hautes pressions et réduit donc l'accroissement relatif d'entropie. Ceci améliore le rendement du cycle et diminue la consommation spécifique de carburant de la machine thermique.

D'un point de vue pratique la combustion s'effectue de manière classique par introduction centrale ou multipoint de carburant et allumage des bougies par une électronique appropriée. Il sera également possible d'utiliser les gaz résiduels de détente pour allumer les gaz frais. Pour permettre une combustion la plus complète possible le système d'injection **7** utilise des pompes injectant le carburant dans la chambre à des niveaux de pression de 1000 bars environ (système type HDI) afin de diminuer les durées d'injections et d'assurer une pulvérisation et un temps d'évaporation du carburant le plus faible possible.

Ces éléments nouveaux d'injection rapide sont essentiels au fonctionnement du pulsomoteur **1**

## 3.3 REFROIDISSEMENT - TEMPERATURE DE PAROI DES MATERIAUX

Bien qu'il soit possible de fonctionner avec un excès d'air; afin d'obtenir les pressions les plus élevées possible on cherchera à fonctionner avec une température de combustion proche du stoechiométrique soit environ 2500°K pour une température d'air frais de 700 °K et un ratio N2/O2 de 3,76 (air ambiant). Il sera nécessaire de rechercher les caractéristiques transitoires des matériaux afin de déterminer la fonction température de paroi $Tp = f(fx)$ fonction de la fréquence de bouffées (fx).

Ainsi un matériau capable de fonctionner à 800° K en régime permanent doit être capable de fonctionner à une température d'autant plus supérieure que la fréquence d'apparition de cette bouffée est faible. Des phénomènes d'effet de peau thermique fréquentiels seront à prendre en compte et ouvrent un nouveau champ d'exploration pour la tenue des matériaux en régime pulsé.

Refroidissement des moteurs alternatifs: Les films d'huile tapissant les parois des cylindres des moteurs alternatifs ont pour objectifs de minimiser les travaux (pertes) de friction des segments du piston, d'améliorer l'étanchéité, d'évacuer une partie des calories. Il est donc nécessaire de refroidir les cylindres (chemises) par eau ou par air sous peine de devoir consommer trop d'huile ou de créer des dépôts de carbone, voir de "serrer" le moteur. Au niveau de la chambre de combustion elle-même et sur une faible hauteur à partir du sommet du cylindre le refroidissement est autant que possible minimiser afin de conserver les calories car lorsque le piston est au PMH le volume de la chambre ne nécessite pas de refroidissement très important.D'ailleurs les culasses de moteur refroidis par air ne sont pas exagérément ailetés.Parfois un jet d'huile circulant à travers la bielle est projeté sous la tête du piston pour le refroidir mais il s'agit de moteur fortement chargés.

On peut donc convenir qu'en l'absence du mouvement du piston il est possible d'effectuer une combustion à volume constant avec un refroidissement minime voir inexistant sous réserve qu'il s'agisse d'un système pulsé. Dans un moteur tournant à 5000 tr/mn (1tr = 12 ms) la fréquence de combustion est 42 Hz (une combustion tous les 2 tours).

Les premiers étages de turbine **21** ou **22** haute pression nécessiteront donc un refroidissement supplémentaire. Une pompe à air entraînée mécaniquement par le générateur de gaz assure le refroidissement du distributeur **18** et des pales **20** HP.Cette pompe d'assistance en air est nécessaire car le niveau de pression des gaz (50-60 Bars) à l'entrée THP est très supérieur à la pression sortie du compresseur **25** (15 Bars dans notre exemple).Dans les calculs de cycles on a supposé que le débit de refroidissement de la pompe à air était égal à 10% du débit masse d'air du compresseur. **25** (voir chapitre 5 Performances estimées)

La discontinuité de l'impulsion n'est pas que temporelle mais également spatiale dans la mesure où une chambre sur 3 fournit une détente au cours d'un cycle de groupe. Ainsi dans un pulsomoteur **1** équipé de 15 chambres seules 5 chambres au maximum fourniront effectivement à un instant donné une impulsion.Les autres chambres étant soit en phase d'admission soit en phase de combustion.L'étude des harmonisations montre l'existence de décalages des impulsions. Ce qui signifie que les pales **20** de turbines **21** ou **22** pourront effectuer un certain parcours avant de voir à nouveau une impulsion. Il est nécessaire de connaître la vitesse de rotation de l'arbre générateur de gaz et le nombre de pales **20** pour déterminer le nombre d'impulsion par pale **20** par tour.De ce point de vue le pulsomoteur **1** à 20 000 tr/mn est plus propice au refroidissement des pales **20.**

### NOTE 1: Ajout d'une chambre de refroidissement ou de balayage

Si les niveaux de température de paroi des chambres le nécessitent il est possible d'ajouter une quatrième chambre de balayage/ refroidissement au cycle. On obtiendra alors le cycle suivant : Admission,Combustion, Détente, Refroidissement/ balayage etc....Le moteur sera alors équipé de 8,12,16 ou un multiple de 4 nombre de chambres. L'objectif évidemment étant de réduire le nombre de chambres.

### 3.4 DISPOSITIFS D'OUVERTURE ET DE FERMETURE RAPIDE DES CHAMBRES

**(Figures 1 à 8 )**. Les entrées d'air et les sorties de gaz des chambres sont contrôlées à partir de dispositifs à ouverture et fermeture rapide (papillons/clapets **6** ou soupapes **6** équipés de chanfrein **32).** Ces dispositifs sont actionnés par des ressorts **26** puissants et des électroaimants de rappel (soupapes électromagnétiques **6).Ces** électroaimants sont commandés par une électronique de puissance (42V) pilotée par un système numérique. Ce qui permet une programmation à l'aide d'algorithmes de commande d'ouverture et de fermeture des clapets **6** qui peut être indépendante de la vitesse de rotation du moteur ou de tout autre paramètre.

### 3.4.1 Clapet (ou Papillon) et crémaillère

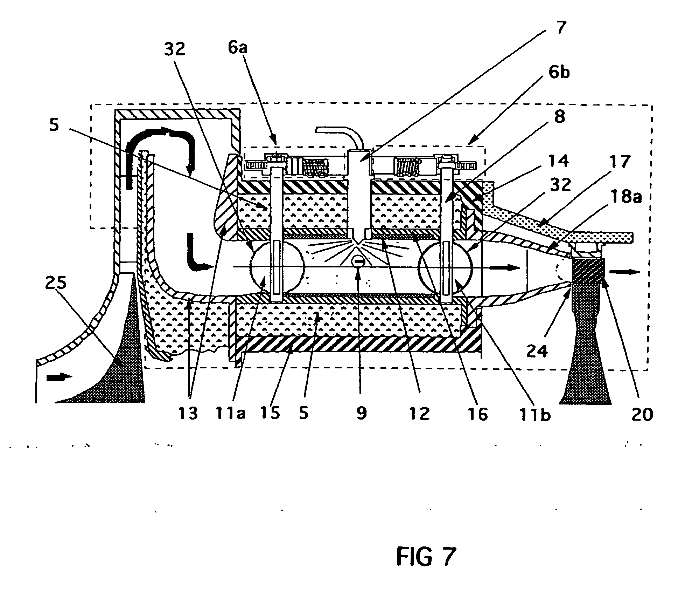

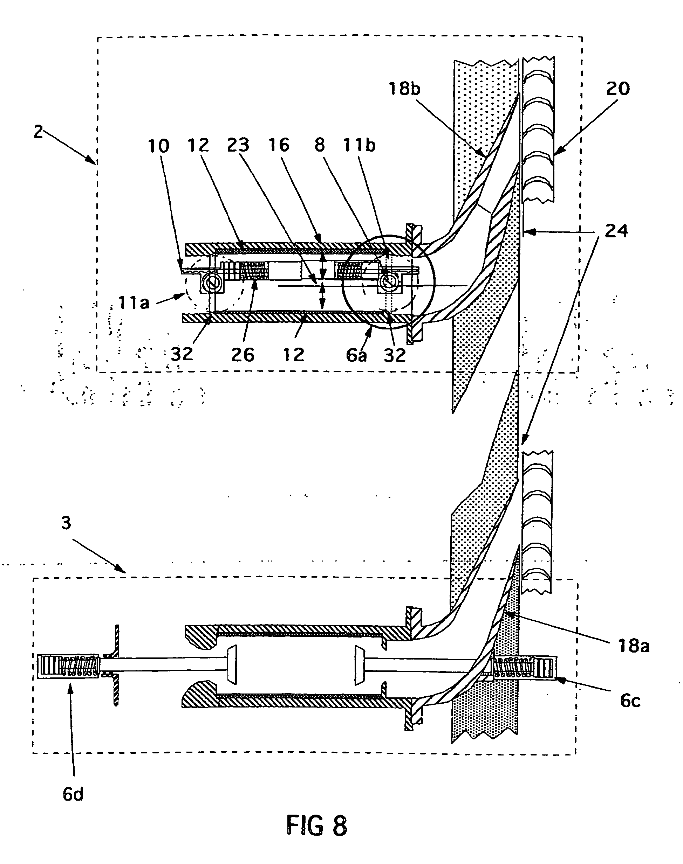

On peut utiliser des clapets **6** équipés de chanfrein **32** (voir **figures 7 et 8** ci - jointes)dont l'axe **8** est légèrement décentré afin d'améliorer l'étanchéité grâce au différentiel de pression exercé sur les faces (les clapets **6** n'effectuent que des 1/4 tour). Ce différentiel de pression créé par le désaxage **23** sera tout de même minimisé pour limiter les efforts des ressorts **26** et des électroaimants de commande améliorant ainsi les accélérations d'ouverture et de fermeture.A l'aide de crémaillère **10** (ou d'un système bielle-manivelle) on ouvre et on ferme les clapets **6** (papillons)

On peut utiliser la prise directe sur l'axe **8** de rotation de l'électroaimant si son encombrement le permet et si son couple moteur est assez grand et rapide -dans ce cas la crémaillère **10** ne sera pas nécessaire et on pourra commander directement les clapets **6.**

Ces clapets **6** ne peuvent que s'ouvrir et se fermer en revenant à leur position initiale mais ils ne peuvent pas effectuer de rotation complète.L'axe **8** de commande est relié à un ressort **26** qui positionne les papillons **6** en position normalement ouvertes (NO). Un électroaimant commande par une platine de puissance piloté par microprocesseur permet de les refermer en l'actionnant sous une tension appropriée (42 VDC). Ce dispositif pourra être inversé si la vitesse d'action de l'électroaimant est supérieure à l'action du ressort **26.** Il faut privilégier les temps d'ouverture faible.

**NOTE 2:**

Il est possible d'utiliser un système classique d'ouverture et de fermeture par soupape **6** à commande électromagnétique ou par commande à came entraîné par un moteur électrique, mais les efforts exercées sur les soupapes **6c** résultant des hautes pressions des gaz dans la chambre pourrait rendre ce type de commande impossible à utiliser et nécessiteraient sans doute des électroaimants ou des ressorts **26** très puissants.

**3.5 CHAMP DE PRESSION Px**

L'espace (les volumes) entre la sortie du distributeur **18** et l'entrée de la roue **21** ou **22** de la THP sera adapté de telle sorte que le champ de pression statique local (Px) **24** ne puisse pas augmenter suite à une diffusion trop importante de l'onde de pression **24.** Un champ de pression statique local **24** trop important en ce lieu (par exemple supérieur à 4 ou 6 bars) aurait pour effet de diminuer les temps de vidange (d'augmenter la fréquence fx de fonctionnement) mais réduirait la masse d'air frais admissible dans le volume de la chambre ce qui réduirait la pression maxi et donc la puissance de la machine.Lors de la gestion spatiale des détentes de chambre on s'arrangera pour que 2 chambres ne soient pas situées l'une à côté de l'autre mais plutôt opposées à 180°. Par exemple si la chambre **1** du groupe 1 - 27 est en phase de détente la prochaine chambre de détente sera dans le groupe **3 - 29** par exemple. Il se peut que chaque bouffée est une influence circonférentielle et qu'un débit de gaz tangentiel (tournant ou fluctuant) dans l'espace **24** distributeur **18**/roue **21** ou **22** de turbine vienne obérer un fonctionnement correct.C'est pour cette raison qu'une gestion azimutale des bouffées semble nécessaire de telle sorte qu'elles s'effectuent à des endroits éloignés les unes des autres.Ceci évite à une chambre en début de détente de rencontrer un champ de pression **24** trop élevé (d'une précédente bouffée) même si ce champ est instationnaire.

**4. PREDIMENSIONNEMENT**

Pour une puissance moteur donnée, il existe un compromis entre le nombre de chambres (3 au minimum) et la taille de ces chambres. Leur nombre améliore la régularité du couple, augmente la souplesse d'utilisation (ex: l'arrêt d'un groupe est possible en fonctionnement réduit ou dégradé de la machine), améliore probablement le rendement turbine **21** ou **22** (à comparer avec les rendements de turbines **21** ou **22** rencontrés couramment dans les moteurs diesel - alimentation à P constante ou à impulsion (pulse converter ou multipulse converter). Augmenter leur nombre accroît les coûts de réalisation.De même, bien que la température soit élevée, il existe une taille optimale de clapet **6** (papillon) de telle sorte que les temps d'ouverture et fermeture soient le plus faible possible tout en minimisant leur masse et donc la puissance requise par les commandes électromagnétiques.Les masses des clapets **6** devront admettre des accélérations similaires à celles rencontrées par les soupapes dans les moteurs alternatifs

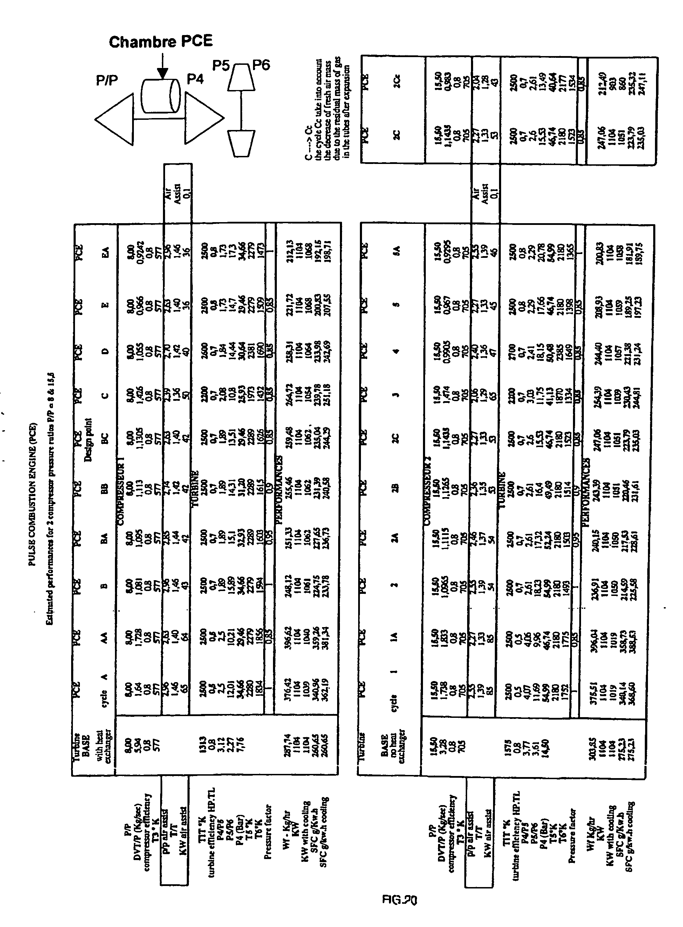

Dans un premier temps et pour faciliter l'intégration dans le turbomoteur nous avons opté pour un exemple de prototype de pulsomoteur **1** comprenant 5 groupes **27,28,29,30** et **31** de 3 chambres. (15 chambres) et nous avons pris le cycle 2C comme "design point". (voir le chapitre 5 erformances estimées et le tableau calcul de cycles-**fig.20).**Soit :

Puissance Moteur 1100 KW (1051 KW utile avec assistance en air)

CSP=165 g/ch.h (173 g/ch.h avec assistance en air)

Rendement turbine **21** ou **22** = 0,7

Compresseur **25** P/P = 15,5

Débit d'air = 1,131 Kg/sec

Rendement = 0,80

Chambre d'impulsion $\varnothing$ = 0,06 m L = 0,15 m Volume 0,424 Litre

Indice de production de pression = 0,85 et TET = 2500 °K.

Nous avons opté pour une chambre cylindrique qui mesurera 15 cm de long et 6 cm de diamètre(0,424 litre) Ce diamètre sera finalisé au cours de l'expérimentation en fonction de la qualité du remplissage et des effets de la compressibilité des gaz.Au point de fonctionnement, le débit masse d'air de 1,131 kg/sec au point nominal correspond à un débit volume de 0,148 m3 /sec à l'entrée des chambres.Soit par groupe de 3 chambres (il y 5 groupes **27,28,29,30,31)** un débit volume (Dv) de 29,6 L/sec. Le volume d'une chambre étant de 0,424 litre cela correspond à une fréquence de fonctionnement de *fxi* (initiale) de 70 Hz environ (69,8 Hz). Il faut remplir 70 fois par seconde une chambre. Soit encore une durée du cycle de chambre de *Txi* = 14,32 millisecondes. Dans un groupe de 3 chambres lorsqu'une est en phase d'admission les autres ne peuvent pas l'être, ce qui signifie que la durée maxi d'admission d'air doit être inférieur à 14,32/3 = 5 ms (ou que **la** fadm = 200 Hz)

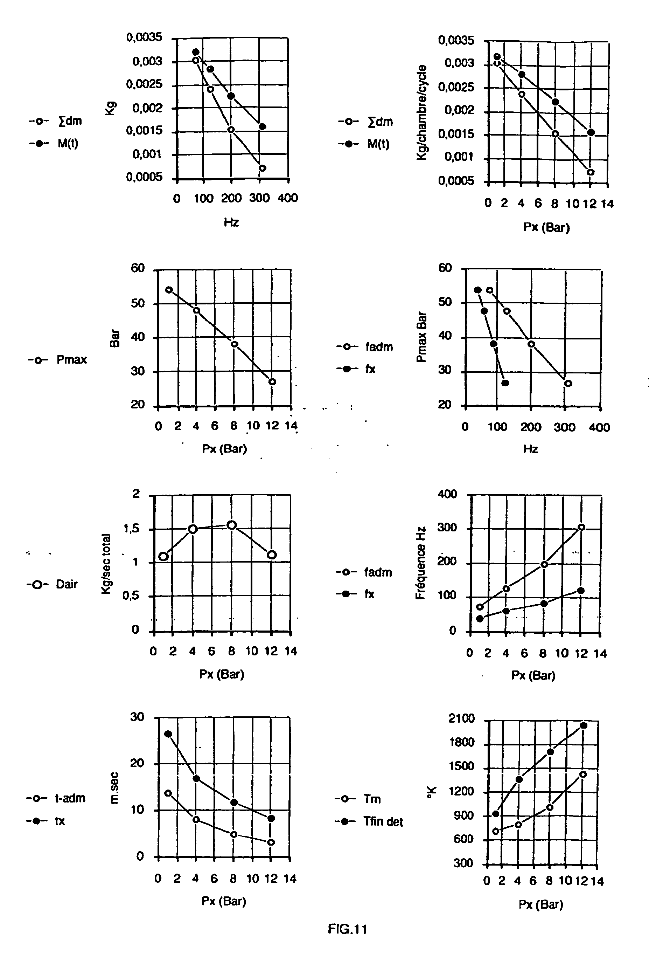

Avec une hypothèse de pression 24 de fonctionnement Px = 4 Bars. Les calculs donne les résultats suivants (voir **Fig.11)**

Px = 4 Bars

M air frais = 0,0024 Kg/chambre/coup

M gas total = 0,00283 Kg/chambre/coup

Tadm = 8,022 ms

Tx (cycle) = 16,772* ms * avec hypothèse Tcomb = 3 ms

fadm = 125 Hz

fxc = 60 Hz (59,6) (fréquence calculée)

Dair = 125 x 0,0024 x 5 = 1,5 Kg/sec

soit un débit supérieur au 1,131 Kg/sec requis.

On note qu'avec une fréquence de cycle (fxc) et une fréquence d'admission (fadm) plus faibles le débit d'air transvasé est supérieur au débit requis.Il sera donc nécessaire de réduire la taille de la chambre ou diminuer le nombre de groupe de telle sorte qu'il y ait convergence avec le débit transvasé et que $fx_{calculé}$ =$fx_{initial}$.

Remarque : Dans les tableaux ci-joints **(Fig.20)** on note le cycle 2Cc. Celui ci est une correction du cycle 2C qui prend en compte en compte l'existence de gaz résiduels dans les chambres. Le renouvellement d'air n'est pas égale à 100% comme nous l'avions supposé initialement avant d'effectuer les calculs des durées de transvasement (admission et détente).

## 5. PERFORMANCES ESTIMEES

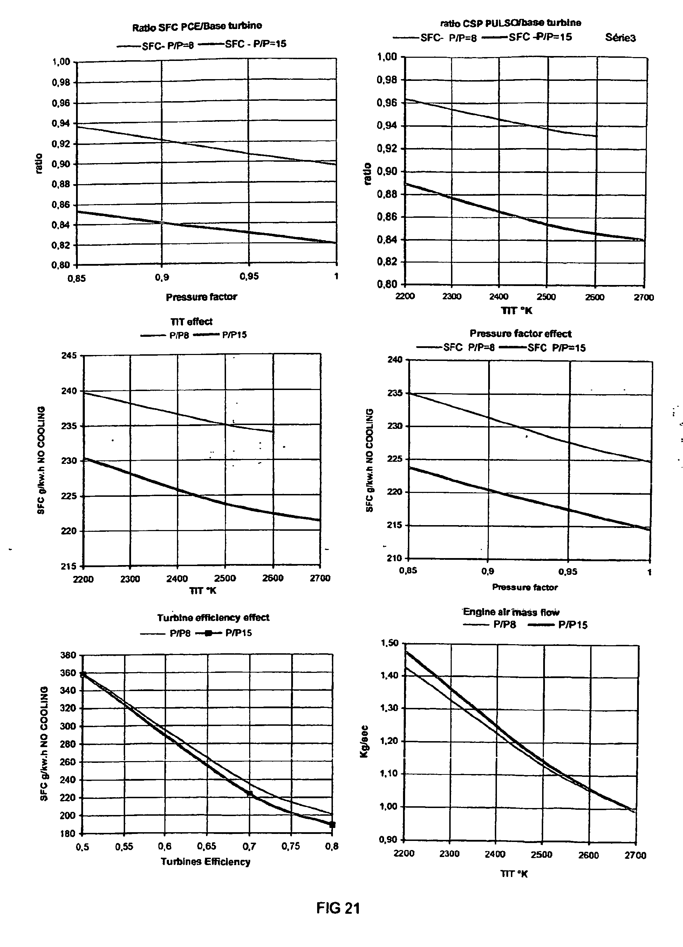

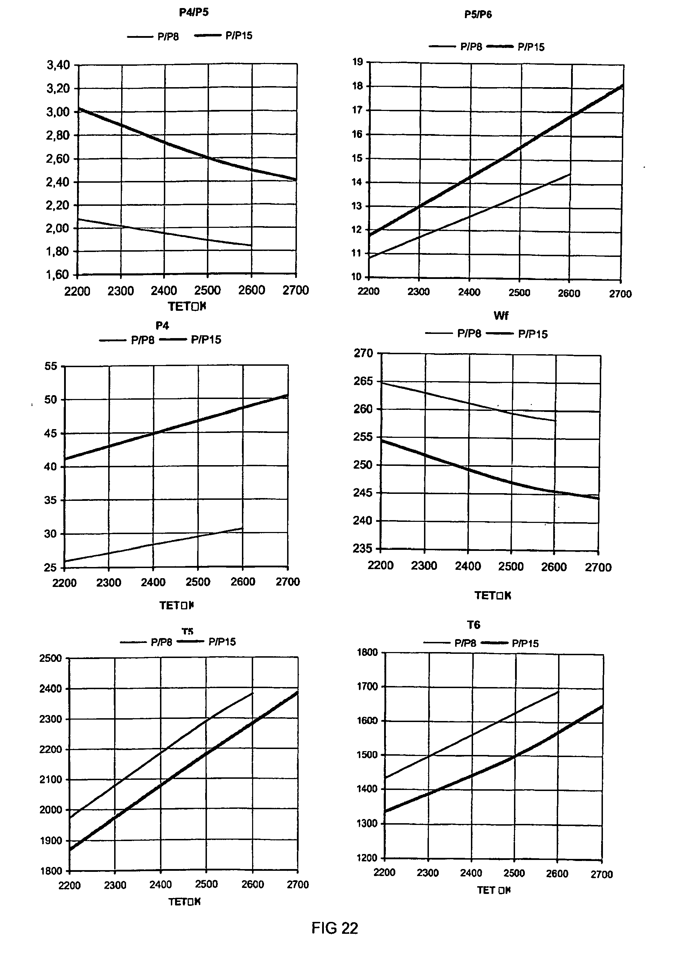

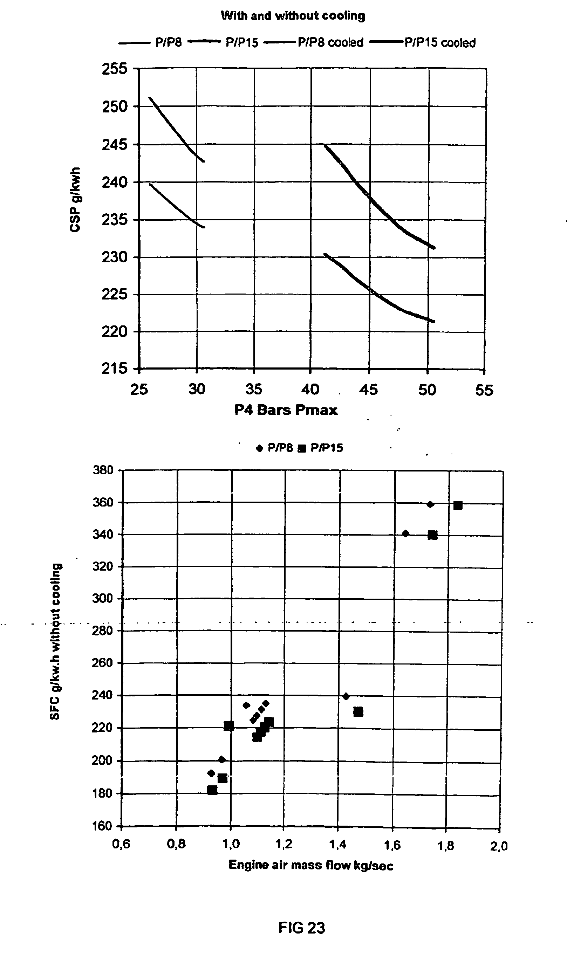

Les **figures 20 à 23** ci-jointes fournissent pour un moteur de 1100 Kw les performances estimées pour 2 rapports de compression du compresseur **25** (P/P = 8 et 15,5). Les calculs utilisent les tables enthalpiques et entropiques usuelles utilisant une composition de gaz d'échappement sans dissociation.De même compte - tenu de la pondération apportée par l'indice d'efficacité de production de pression sortie chambre nous avons supposé que la pression en amont turbine était similaire à celle des turbines **21** ou **22,** c'est à dire non impulsionnelle. Cependant la littérature indique que des rendements turbines **21** ou **22** de 0,70 sont couramment rencontrés avec des turbines de turbocompresseur qui fonctionnent avec des ondes de pression.Une étude de sensibilité a été menée sur les paramètres suivants :

### 5.1 Rendement Turbine

Pour évaluer l'influence du rendement turbine **21** ou **22** (THP et TL) : Nous avons supposé que les rendements THP étaient égaux au rendement TL.Les 3 valeurs retenues sont : rendement turbine **21** ou **22** ETAT = 0,5 - 0,7 et 0,8 .A noter que la littérature admet couramment un rendement de 0,7 pour les turbines de turbocompresseurs des diesels semi -rapide ou lents fonctionnant également en régime pulsé.

L'utilisation du turbocompresseur de plus en plus prépondérante dans les moteurs alternatifs et l'obtention de rendement correcte (0,70) est une preuve que l'alimentation des turbines en gaz pulsé est possible.Dans les moteurs Diesel lents et semi-rapide de nombreux travaux (ex: moteurs Pielstick - Sulzer) ont montré que des systèmes de plus en plus sophistiqués (pulse converter et multipulse converter ou chaque cylindre alimente une portion particulière du distributeur **18** turbine), amélioraient les rendements des moteurs par amélioration de la boucle dite "Basse pression" du cycle moteur (boucle de vidange et de remplissage cylindre).Cette boucle résulte pour l'essentiel de son interaction avec le turbocompresseur.L'objectifs de ces sytèmes étaient de conserver la bouffée d'échappement jusqu'à son introduction dans le distributeur **18** de la turbine **21** ou **22.** Les alimentations des turbo dits "à pression constante" (un seul collecteur de récupération) sont en effet moins efficace du fait des pertes de pression résultant de la diffusion dans le collecteur de récupération et des pertes par turbulences. Le pulsomoteur **1** permet à la bouffée d'agir directement sur les pales **20** après une courte distance (distance entre le collecteur sortie chambre et l'entrée DTHP). Ceci laisse présager de rendements turbine **21** ou **22** plus efficaces que ceux rencontrés dans les turbocompresseurs. On peut s'interroger sur l'opportunuité de turbine **21** ou **22** à action pour les premiers étages ?

### 5.2 Indice d'efficacité de production de pression entrée turbine HP

Il s'agit d'un indice qui corrige des effets de la compressibilité du gaz non parfait au cours de la combustion à volume constant, des pertes de charges à l'entrée et à la sortie des chambres à travers les valves **6,** des imperfections de remplissage.Les 4 valeurs retenues pour l'étude de sensibilité sont : INDICE = 1 - 0,95 - 0,90 et 0,85. Ainsi une Pmax de 55 Bars dans la chambre donne une Pentrée THP de 46,75 Bars avec des pertes estimées à 15%.

### 5.3 température entrée turbine (TET)

La température de combustion devrait se situer entre 2400 et 2800°K selon le niveau de température de l'air frais,du niveau de dissociation (peroxyde NOx etc...) et du niveau d'imbrûlés résultant d'une combustion plus ou moins parfaite.Les calculs de débits de carburant résultant du calcul de la richesse sont basés sur les tables usuelles utilisées pour le calcul de richesse dans les turbine à gaz. Ce qui n'est pas parfaitement correct dans la mesure ou ces calculs supposent une combustion à pression constante et non à volume constant comme dans la chambre à impulsion.
Les écarts sont relatifs aux calculs des enthalpies de réactions effectués à partir des enthalpies de formation des espèces et non à partir des énergies internes de formations. L'écart est inférieur à 1% à 298°K. **(utilisation** du Pceff). Une erreur existe également sur les calculs de l'enthalpie de réaction à la température de 298°K au lieu de 2500°K. Cet écart est également inférieur à 1%, il est d'ailleurs couramment négligé dans les calculs de cycle des turbine à gaz.Nous avons donc étudié l'influence des températures de combustion sur les résultats des calculs de cycle pour TET : 2200 °K - 2500 et 2800 °K. Les figures **20** à **23** ci-jointes fournissent les résultats de calcul de cycles.

### 6. CONCLUSIONS

Avec des hypothèses conservatrices (en particulier sur les rendements turbines **21** ou **22)** on note que pour un rendement turbine de 0.7, un Indice de production de pression à volume constant de 0.85 et une température de combustion de 2500° K les consommations spécifiques du pulsomoteur **1** sont plus faibles que les consommations des turbine à gaz incluant ou non un échangeur d'une part et que ces consommations sont proches voir plus faibles que celles des moteurs diesel d'autre part.
Le second avantage est qu'à même puissance le débit d'air à transvasé est très inférieur à celui d'une turbine à gaz (2 à 3 fois moindre). Ce qui réduit la taille des turbomachines tout en conservant l'attrait d'un fonctionnement continu non alternatif (vibrations, consommation d'huile, bruit).
Le rendement turbine est un paramètre très déterminant du niveau de consommation spécifique. Il nécessite l'étude et la mise au point d'étages de turbines **21** ou **22** capable de supporter une haute TET et une haute pression sous forme impulsionnelle. L'étude de sensibilité montre que des consommations spécifiques de 132 à 137 g/ch.h peuvent être obtenus avec le rendements des turbines à impulsion de 0,80.Ce rendement de 0,8 est couramment atteint dans les turbines à gaz.
La discontuinité introduite par le régime pulsé et les chambres impulsionnelles permet le fonctionnement partiel ou dégradé de la machine (en arrêtant un ou plusieurs groupes). La régulation est ainsi indépendante d'un paramètre particulier. On peut faire fonctionner un certain nombre de chambres toujours au maximum (pour la puissance maxi ) ou à charge partielle fonctionner au meilleur rendement (pour la CSP mini) .
Selon le niveau de fiabilisation, une chambre impulsionnelle peut être développée et appliquée à n'importe quelle machine aéronautique, terrestre ou marine - on note là l'impact bénéfique sur les coûts récurrents ainsi que sur les coûts non-récurrents de mise au point et de développement. Il sera possible d'augmenter la puissance d'une machine en modifiant le nombre de groupe de 3 chambres. On peut imaginer toute une gamme de puissance de machines équipées avec la même chambre mais dont le nombre de groupes diffère.

**Annexe de Calcul**

Un traitement complet du processus de remplissage et de vidange d'une chambre **16** prendrait en compte les distributions des vitesses des gaz étant donné que les quantités de mouvement associées aux effets aérodynamiques locaux affectent les entrées et sorties de ces gaz.

Une première évaluation des durées de remplissage et de vidange des chambres **16** à partir d'un calcul simple est possible en supposant que les gaz obéissent aux équations des gaz parfaits et que, dans le cas du remplissage, le mélange (air frais + gaz résiduel) est homogène et instantané.

P,T,m, Pression, Température, Masse dans la chambre 16. V volume de la chambre **16** (constant)

On écrit les équations de conservation de l'énergie, de masse et l'équation d'état à l'instant $t$ et à l'instant $t+dt$ on obtient alors :

A l'instant $t$ on a dans la chambre **16** l'énergie

$mC_vT$

Pendant l'instant dt entre ou s'échappe les quantités ( $Tc$ est la température sortie compresseur **25).**

$dmC_pT_c \quad dmC_pT$

A l'instant $t+dt$ on a dans la chambre **16** les énergies (respectivement pour le remplissage et la vidange)

$$(m+dm)C_v(T+dT) \qquad (m-dm)C_v(T-dT)$$

Soit les équations (respectivement pour le remplissage et la vidange)

$$mC_vT + dmC_pT_c = (m+dm)C_v(T+dT)$$

$$mC_vT - dmC_pT = (m-dm)C_v(T-dT)$$

D'où (respectivement pour le remplissage et la vidange)

$$\frac{dT}{T} = \frac{dm}{m}\left(\gamma\frac{T_c}{T}-1\right) \qquad \frac{dT}{T} = \frac{dm}{m}(\gamma-1)$$

L'équation des gaz parfaits donne avec R = constante des gaz et V = cte

$$PV = mRT \qquad soit \qquad \frac{dP}{P} = \frac{dm}{m} + \frac{dT}{T}$$

En substituant $dT/T$ dans l'équation précédente et en différentiant par rapport au temps, on obtient en négligeant les termes de second ordre (respectivement pour le remplissage et la vidange)

Variation de pression P(t) dans la chambre **16** au cours de l'admission (Tc température sortie compresseur **25** ou sortie intercooler **4)**

$$\frac{dP}{dt} = \frac{\gamma.P}{m}\frac{T_c}{T}\frac{dm}{dt}$$

Variation de pression P(t) dans la chambre **16** au cours de la détente

$$\frac{dP}{dt} = \frac{\gamma.P}{m}\frac{dm}{dt}$$

On associe ensuite les équations suivantes :
Débit masse et m(t) masse instantanée :

$$D = \frac{dm(t)}{dt}$$

Expression du débit réduit fonction du nombre de Mach statique (M) au col **24** du distributeur **THP 18** situé après la sortie de la chambre **16** (permet également le calcul après le papillon d'ouverture **11a** à l'entrée **16** de la chambre) -Le section est A. Débit réduit et débit masse instantané entrant ou sortant de la chambre **16** en fonction du temps.

$$\frac{D.\sqrt{T}}{P.A} = \sqrt{\frac{\gamma}{R}}.M.\left[1+\frac{\gamma-1}{2}.M^2\right]^{\frac{\gamma+1}{2(\gamma-1)}} \qquad \frac{dm}{dt} = \frac{P.A}{\sqrt{T}}.\sqrt{\frac{\gamma}{R}}.M.\left[1+\frac{\gamma-1}{2}.M^2\right]^{\frac{\gamma+1}{2(\gamma-1)}}$$

P, pression totale entrée distributeur **18** DTHP (=Pression maxi chambre **16** moins les pertes), Px pression statique au col **24** du DTHP **18** fonction du champ de pression statique local situé **24** entre la sortie DTHP **18** et la roue de turbine **20,21** ou **22** (adaptation du col **24).**

$$\frac{P}{Px} = \left[1+\frac{\gamma-1}{2}.M^2\right]^{\frac{\gamma}{\gamma-1}}$$

T, Température de mélange des gaz résiduels et de l'air frais admis dans la chambre **16** au cours de l'admission ou la vidange fonction des températures et de la masse d'air frais entrant et de la masse non vidangée résiduelle dans la chambre. (Hypothèse des Cp= cte.)

$$T_{(t+1)} = \frac{m_{(t).résiduelle}.T_{(t).résiduelle} + m_{(t)airfrais}.T_c}{m_{(t).résiduelle} + m_{(t).airfrais}}$$

Caractéristiques thermodynamiques des gaz.

$$\gamma = \frac{Cp}{Cv} \qquad R = Cp - Cv$$

Le calcul est itératif et converge lorsque la masse volumique RHO dans la chambre calculée par 2 méthodes s'égalise et vérifie que :

$$RHO = \frac{P_{(t)}}{R\,T_{(t)}} = \frac{m_{(t)}}{V}$$

$V = cons\,tan\,te$

$$\sum_i dm_i = m$$

## ITERATIONS

Un $dt_{initial}$ (fixé par hypothèse suffisamment petit) permet le calcul de dm/dt puis le calcul de dP/dt ce qui donne un $dP_{itéré}$ comparé à un $dP_{initial}$ (fixé également par hypothèse suffisamment petit).
Le calcul de P+dP (ou P-dP pour la détente), de T(t+1), et m+dm conduit à vérifier que P/RT > m/V ou P/RT < m/V
Selon le cas on incrémente sur le dt et le dP convenables jusqu'à obtenir la convergence sur RHO. Ce qui donne le $dP_{final}$ et le $dm_{final}$.
Le mélange parfait (RHO mélange) de la masse résiduelle des gaz restant après la détente et la masse d'air frais entrant dans la chambre est une hypothèse de calcul simplifié permettant l'étude de sensibilité sur les temps de remplissage et de vidange de la chambre pour plusieurs hypothèses de Px = 1,4,8 et 12 Bars

## CALCUL DE CYCLE

Dans les calculs de cycle on utilise les tables conventionnelles. Enthalpies et entropies des gaz calculées à partir de polynôme et fonction de la richesse locate.

$$H(T) = \sum_n a_n . T^n \qquad Hm(T,\alpha_i) = \frac{H_{air} + \alpha_i . H_{kéro}}{1+\alpha_i} \qquad \alpha_i = richesse = \frac{dc}{D_i} = \frac{carburant}{air}$$

$$\phi(T) = \sum_j a_j T^j \qquad \frac{P_2}{P_1} = 10^{(\phi_{t_2} - \phi_{t_1})} \qquad \phi(T) = Log_{10} \exp\left(\int_0^T \frac{Cp}{T} dT\right)$$

## Revendications

1. Turbomachine (1) comportant un ou plusieurs compresseurs (25) axiaux ou centrifuges et un ou plusieurs étages (21 ou 22) de turbine axiale ou radiale de détente à action ou à réaction montés sur des arbres tournants, la turbomachine comportant soit un ou plusieurs groupes de 3 chambres (16) de combustion soit un ou plusieurs groupes de 4 chambres de combustion, les groupes de chambres de combustion fonctionnant à une fréquence fixe ou variable et délivrant des bouffées de gaz, impulsions, aux étages (21) de turbines, à action ou à réaction, résultant d'une combustion effectuée à volume constant dans les dites chambres suivant les cycles à 3 phases -admission, combustion, détente- pour les groupes de 3 chambres et à 4 phases - admission, combustion, détente, balyage/ refroidissement - pour les groupes de 4 chambres **caractérisée en ce que** la phase admission s'effectue dans la première chambre pendant que la phase de combustion s'effectue dans la deuxième chambre, pendant que la phase de détente s'effectue dans la troisième chambre du même groupe de trois chambres, et la phase de balayage s'effectue dans la quatrième chambre pour un groupe de quatre chambres.

2. Turbomachine selon la revendication 1 **caractérisée en ce que** les ouvertures et les fermetures des entrées et sorties des chambres s'effectuent à partir de clapets (6a, 6b) ou papillons ou soupapes (6c) commandés à partir de moteurs électriques ou d'électroaimants et de ressorts (26) de rappel via une crémaillère (10) ou un système-bielle manivelle ou en prise directe sur l'axe de rotation de l'électroaimant.

3. Turbomachine selon les revendications 1 et 2 **caractérisée en ce que** la forme des chambres (16) est cylindrique ou sphérique ou autre.

4. Turbomachine selon l'une quelconque des revendications 2 à 3 **caractérisée en ce que** les clapets (6a,b,c) ou les papillons (11a,b,c) ou les soupapes (6c) d'étanchéité des ouvertures et fermetures des chambres sont chanfreinés et que les papillons ou clapets ont un axe (8) de guidage décentré afin d'améliorer l'étanchéité.

5. Turbomachine selon la revendication 1 **caractérisée en ce que** le refroidissement des matériaux en contact avec les gaz chauds utilise le réglage de la fréquence d'apparition des bouffées de gaz, impulsions, et l'harmonisation des groupes entre eux afin de permettre des temps successifs de refroidissement alternés avec les bouffées chaudes ce qui permet d'augmenter la température d'utilisation des matériaux en contact avec les gaz chauds.

6. Turbomachine selon la revendication 1 **caractérisée en ce qu'**une pompe à air d'assistance de refroidissement est ajoutée et entraînée par l'arbre moteur de la turbomachine (1) afin de refroidir les matériaux.

7. Turbomachine selon l'une quelconque des revendications 1,5 et 6 ayant des distributeurs **caractérisée en ce que** les distributeurs (18a ou 18b ou 19) sortie chambres sont monocanal, une sortie distributeur par chambre, ou multicanaux plusieurs sorties pour une bouffée provenant d'une même sortie chambre.

8. Turbomachine selon l'une quelconque des revendications 1 , 5 , 6 et 7 ayant des distributeurs **caractérisée en ce que** les distributeurs (18a ou 18b ou 19) des étages de turbine peuvent être sonique ou supersonique et de forme carrée,ronde ou autre.

9. Turbomachine selon l'une quelconque des revendications 1 et 5 **caractérisée en ce que** la régulation de la machine s'effectue à partir de mesures de pression entrée et sortie chambre ainsi que de la vitesse moteur et d'autres paramètres susceptibles d'être gérés par un système numérique, permettant de nombreuses harmonisations des temps d'ouverture et de fermeture des chambres (16) autorisant des perméabilités et des lignes de fonctionnement dans le champ compresseur (25) variables.

10. Turbomachine selon la revendication 1 **caractérisée en ce qu'**un échangeur (4), intercooler - air/air ou air/eau ou air /huile, est inséré entre la sortie compresseur (25) et l'entrée des chambres (16) afin d'améliorer le remplissage d'air des chambres.

**Claims**

1. A turbine engine (1) comprising one or more axial or centrifugal compressors (25) and one or more stages (21 or 22) of axial or radial expansion turbine, reaction-impulse, mounted on rotating shafts, the turbine engine comprising: either one or more groups of 3 combustion chambers **(16)** or either one or more groups of 4 combustion chambers (16), the combustion chamber groups running at a fixed or variable frequency and delivering gas puffs (impulses) to the turbine stages (21) (reaction-impulse) resulting from a combustion carried out at constant volume in the chambers according to the 3-phase cycles:- intake, combustion, expansion- for the groups of 3-chambers and 4-phase cycles : intake, combustion, expansion, scavenging/cooling for the groups of 4-chambers, **characterized in that** the intake phase occurs in the first chamber while the combustion phase occurs in the second chamber, while the expansion phase occurs in the third chamber of the same group of three chambers, and while the scavenging/ cooling phase occurs in the fourth chamber for a group of four chambers.

2. The turbine engine as claimed in Claim 1 **characterized in that** the openings and closings of the chamber inlets and outlets are carried out from check valves **(6a,b)** or butterfly valves **(11a,b,c)** or side valves **(6c)** driven by electrical motors or electromagnets (6a et 6b) and return springs (26) via a rack bar (10) or via a system of connecting rod and crank arm/crank, or powered direct off axis of rotation of the electromagnets (6a,b,)

3. The turbine engine as claimed in Claim 1 and 2 **characterized in that** the chamber form (16) is cylindrical or spherical or else.

4. The turbine engine as claimed in Claim 2 to 3 **characterized in that** the valves **(6a,b,c)** or butterfly valves **(11a,b,**

c) or the sealing valves **(6c) located at** the chamber inlet and outlet are chamfered and that the butterfly valves **(11a,b,c)** or sealing valves (6a,b,c) have a guiding axis out of the center line (8) so as to improve the sealing.

5. The turbine engine as claimed in Claim 1 **characterized in that**: the cooling of the materials in contact with hot gases uses the appropriate setting of the cycle frequency of the gas puffs (impulses) occurring and the mutual matching-up of the groups of chambers, so as to enable successive cool-down times, alternated with hot puffs times, which allows the increase of the temperature of use of the materials in contact with the hot gases.

6. The turbine engine as claimed in Claim 1 **characterized in that** a cool-down assistance air pump has been added and is driven by the turbine engine (1) motor shaft to cool the materials.

7. The turbine engine as claimed in Claim 1, 5 and 6 comprising turbine nozzles **characterized in that** the chamber exhaust nozzles **(18a or 18b or 19)** are single-channel (one exhaust nozzle per chamber), or multichannel (several -exhaust nozzles for one puff coming out the same chamber outlet).

8. The turbine engine as claimed in Claim 1, 5, 6 and 7 comprising turbine nozzles **characterized in that** the nozzles (18a or 18b or 19) of the turbine stage (21 or 22) may be sonic or supersonic and be of a square, circle form or else.

9. The turbine engine as claimed in Claim 1 and 5 **characterized in that** the engine control system is operated from pressure measurements at the chamber inlet and outlet as well as from the measurement of the motor shaft rotation speed and any other parameters likely to be managed by a digital system, enabling a lot of matching-ups of the chamber (16) opening and closing times, enabling variable permeability and operating lines in the compressor map (25).

10. The turbine engine as claimed in Claim 1 **characterized in that** an intercooler (4) (air/air or air/water or air /oil) is installed between the compressor outlet (25) and the chamber inlet (16) to improve the chamber air filling up.

## Patentansprüche

1. Turbomaschine (1), die einen bzw. mehrere Axial- bzw. Turboverdichter (25) und eine bzw. mehrere axiale bzw. radiale, auf einer Drehwelle eingebaute(n) Aktions-Reaktions-Turbinenstufe(n) (21 bzw. 22) umfasst, wobei die Turbomaschine folgendes umfasst: entweder einen bzw. mehrere Baugruppen von 3 Brennkammern (16) oder einen bzw. mehrere Baugruppen von 4 Brennkammern (16), wobei die Brennkammerbaugruppen mit einer festen bzw. variablen Frequenz laufen und Gasausbrüche (Impulse) den (Aktions-Reaktions) Turbinenstufen (21) angeben, die sich aus einer Verbrennung mit Gleichraumprozess in diesen Kammern ergibt, gemäß der dreiphasigen Zyklen: Eintritt, Verbrennung, Entspannung für die Baugruppen von 3 Brennkammern und der vierphasigen: Eintritt, Verbrennung, Entspannung Spülung/Abkühlung für die Baugruppen von 4 Brennkammern, **dadurch gekennzeichnet, dass** die Eintrittsphase im ersten Kammer erfolgt, während die Verbrennungsphase im zweiten Kammer erfolgt, während die Entspannungsphase im dritten Kammer derselben Kammerbaugruppe erfolgt, und die Spülungs- und Kühlungsphase im vierten Kammer bei einer Baugruppe von vier Kammern erfolgt.

2. Turbomaschine nach Anspruch 1, **dadurch gekennzeichnet, dass** das Öffnen und Schließen der Kammereintritte- und Ausgänge durch Sperrventile (6a,b) bzw. Klappenventile **(11a,b,c)** bzw. Einlassventile **(6c)** erfolgen, die aus Elektromotoren bzw. Elektromagneten (6a et 6b) und aus Rückstellfedern (26 ) durch eine Zahnstange (10) bzw. durch eine Kurbelstange-Kurbel-Baugruppe, bzw. im direkten Gang auf der Drehachse der Elektromagneten (6a, b,) gesteuert werden

3. Turbomaschine nach Anspruch 1 und 2, **dadurch gekennzeichnet, dass** die Kammerform (16) zylindrisch bzw. kugelförmig bzw. anderes ist.

4. Turbomaschine nach einem der Ansprüche 2 bis 3, **dadurch gekennzeichnet, dass** die Sperrventile **(6a,b)** bzw. Einlassventile **(11a,b,c)** bzw. Dichtventile **(6c)** am Eintritt und Austritt der Kammer angefast sind und dass die Einlassventile **(11a,b,c)** bzw. Sperrventile (6a,b,c) eine seitliche Führungsachse (8), um die Dichtheit zu verbessern.

5. Turbomaschine nach Anspruch 1, **dadurch gekennzeichnet, dass**: die Abkühlung der in Berührung mit den Heißgasen Materialen die geeignete Einstellung der Zyklenfrequenz der Gasausbrüche sowie die Harmonisierung der Baugruppen untereinander benutzt, um aufeinander folgende und mit heißen Ausbruchzeiten wechselnden Kühlungszeiten zu ermöglichen, was es erlaubt, die Betriebstemperatur der in Berührung mit den Heißgasen Materialen zu erhöhen.

6.  Turbomaschine nach Anspruch 1, **dadurch gekennzeichnet, dass** eine Kühlungshilfe-Luftpumpe hinzugefügt und durch die Triebwerkswelle der Turbomaschine (1) angetrieben wird, um die Materialen abzukühlen.

7.  Turbomaschine nach einem der Ansprüche 2, 5 und 6 mit Verteilern, **dadurch gekennzeichnet, dass** die Turbinenleitkranze (18a bzw. 18b bzw. 19) am Ausgang der Kammer Einkanal-Schubdüsen sind (ein Düsenausgang pro Kammer), bzw. Mehrkanal-Schubdüsen (mehrere Schubdüsen für einen Ausbruch, der aus dem gleichen Kammerausgang stammt).

8.  Turbomaschine nach einem der Ansprüche 1, 5, 6 und 7 mit Turbinenleitkranzen, **dadurch gekennzeichnet, dass** die Leitkranze **(18a bzw. 18b bzw. 19)** der Turbinenstufen (21 bzw. 22) Schall- bzw. Überschallverteiler und viereckig, rund bzw. weiteres sein können.

9.  Turbomaschine nach einem der Ansprüche 1 und 5, **dadurch gekennzeichnet, dass** das Regelungssystem der Maschine ab der Druckmessungen am Kammereingang und -Ausgang sowie der Messung der Drehgeschwindigkeit der Triebwerkswelle gesteuert wird und ab weiteren Parameter, die dazu fähig sind, durch ein Digitalsystem verwaltet zu sein, das zahlreiche Harmonisierungen der Öffnungs- und Schließzeiten der Kammer **(16),** die variablen Durchlässigkeiten und Betriebslinien im Verdichterfeld (25) erlauben.

10. Turbomaschine nach Anspruch 1, **dadurch gekennzeichnet, dass** ein Zwischenkühler (4) (Luft/Luft bzw. Luft/Wasser bzw. Luft/Öl) zwischen den Verdichterausgang (25) und den Kammereintritt (16) eingebaut wird, um die Luftauffüllung der Kammer zu verbessern.

**Vue CC**

FIG 1

FIG 2   **Vue BB**

FIG 3

Vue AA

FIG 4

FIG 5

**Vue DD**

FIG 6

FIG 7

FIG 8

## Détente jusque Px = 1, 4,8 et 12 bars et fx = 74, 94 , 145, 310 Hz

FIG .9

## Détente jusque Px = 1, 4,8 et 12 bars et fx = 74, 94 , 145, 310 Hz

FIG.10

FIG.11

**Détente jusque Px = 4 bars   Tadm =8,022 ms,Tcomb 10,772 ms et Tdet=16,772 ms**

HARMONISATION 1,2,3,4   T combustion = 3 ms

FIG.12

**Détente jusque Px = 4 bars   Tadm =8,022 ms,Tcomb 10,772 ms et Tdet=16,772**

**HARMONISATION 1,2,3,4   T combustion = 3 ms**

M(t) Masse

Harmonisation 1

Selon l'état à To chaque chambre effectue son cycle (admission, combustion ou
détente)

Harmonisation 2

Pour le conservation
du débit en régime
permanent lorsqu'une
chambre est pleine
une autre s'ouvre

Harmonisation 3

La période Tx (16 ms)
est divisé par le nombre
de groupe de 3 chambres (ici 5 groupes de 3
chambres)

16,772/5 = 3,35 ms

Harmonisation 4

La période Tx (16 ms)
est divisé par le nombre de chambre (3) par
groupe.

16,772/3 = 5,59 ms

FIG.13

29

**Détente jusque Px = 4 bars Tadm =8,022 ms,Tcomb 14,772 ms et Tdet=19,772 ms**

FIG.14

**Détente jusque Px = 4 bars Tadm =8,022 ms,Tcomb 14,772 ms et Tdet=19,772 ms**

### HARMONISATION 1,2,3,4   T combustion = 6 ms

FIG.15

P(t) pour Px = 4 Bars et fx = 94 Hz

FIG.16

P(t) pour Px = 4 bars et fx = 94 Hz HARMONISATION T= 8 ms

FIG.17

EP 1 483 489 B1

33

M(t) pour Px = 4 bars et fx = 94 Hz HARMONISATION T= 8 ms

FIG.18

EP 1 483 489 B1

34

FIG. 19

FIG.20

EP 1 483 489 B1

## PULSE COMBUSTION ENGINE (PCE)

Estimated performances for 2 compressor pressure ratios P/P = 8 & 15,5

| | Turbine BASE with heat exchanger | PCE cycle A | PCE AA | PCE B | PCE BA | PCE BB | PCE BC Design point | PCE C | PCE D | PCE E | PCE EA | |
|---|---|---|---|---|---|---|---|---|---|---|---|---|
| **COMPRESSEUR 1** | | | | | | | | | | | | |
| P/P | 8,00 | 8,00 | 8,00 | 8,00 | 8,00 | 8,00 | 8,00 | 8,00 | 8,00 | 8,00 | 8,00 | |
| DVT/P (Kg/sec) | 5,94 | 1,64 | 1,728 | 1,081 | 1,095 | 1,113 | 1,1305 | 1,426 | 1,055 | 0,966 | 0,9242 | |
| compressor efficiency | 0,8 | 0,8 | 0,8 | 0,8 | 0,8 | 0,8 | 0,8 | 0,8 | 0,8 | 0,8 | 0,8 | |
| T3 °K | 577 | 577 | 577 | 577 | 577 | 577 | 577 | 577 | 577 | 577 | 577 | |
| p/p air assist | | 2,96 | 2,63 | 2,96 | 2,85 | 2,74 | 2,63 | 2,39 | 2,70 | 2,63 | 2,96 | Air Assist 0,1 |
| T/T | | 1,46 | 1,40 | 1,46 | 1,44 | 1,42 | 1,40 | 1,36 | 1,42 | 1,40 | 1,46 | |
| KW air assist | | 65 | 64 | 43 | 42 | 42 | 42 | 50 | 40 | 36 | 36 | |
| **TURBINE** | | | | | | | | | | | | |
| TIT °K | 1313 | 2500 | 2500 | 2500 | 2500 | 2500 | 2500 | 2200 | 2600 | 2500 | 2500 | |
| turbine efficiency HP.TL | 0,8 | 0,8 | 0,8 | 0,7 | 0,7 | 0,7 | 0,7 | 0,7 | 0,8 | 0,8 | 0,8 | |
| P4/P5 | 3,12 | 2,5 | 2,5 | 1,89 | 1,89 | 1,89 | 1,89 | 2,08 | 1,84 | 1,73 | 1,73 | |
| P5/P6 | 2,27 | 12,01 | 10,21 | 15,89 | 15,1 | 14,31 | 13,51 | 10,8 | 14,44 | 14,7 | 17,3 | |
| P4 (Bar) | 7,76 | 34,66 | 29,46 | 34,66 | 32,93 | 31,20 | 29,46 | 25,93 | 30,64 | 29,46 | 34,66 | |
| T5 °K | | 2280 | 2279 | 2279 | 2289 | 2289 | 2289 | 1973 | 2381 | 2279 | 2279 | |
| T6 °K | | 1834 | 1856 | 1594 | 1603 | 1615 | 1626 | 1432 | 1690 | 1509 | 1473 | |
| Pressure factor | | 1 | 0,85 | 1 | 0,95 | 0,9 | 0,85 | 0,85 | 0,85 | 0,85 | 1 | |
| **PERFORMANCES** | | | | | | | | | | | | |
| Wf - Kg/hr | 287,74 | 376,42 | 396,62 | 248,12 | 251,33 | 255,46 | 259,48 | 264,72 | 258,31 | 221,72 | 212,13 | |
| KW | 1104 | 1104 | 1104 | 1104 | 1104 | 1104 | 1104 | 1104 | 1104 | 1104 | 1104 | |
| KW with cooling | 1104 | 1039 | 1040 | 1061 | 1062 | 1062 | 1062 | 1054 | 1064 | 1068 | 1068 | |
| SFC g/Kw.h | 260,65 | 340,96 | 359,26 | 224,75 | 227,65 | 231,39 | 235,04 | 239,78 | 233,98 | 200,83 | 192,15 | |
| SFC g/kw.h cooling | 260,65 | 362,19 | 381,34 | 233,78 | 236,73 | 240,58 | 244,29 | 251,18 | 242,69 | 207,55 | 198,71 | |

| | Turbine BASE no heat exchanger | PCE cycle 1 | PCE 1A | PCE 2 | PCE 2A | PCE 2B | PCE 2C | PCE 3 | PCE 4 | PCE 5 | PCE 5A | | PCE 2C | PCE 2Ce |
|---|---|---|---|---|---|---|---|---|---|---|---|---|---|---|
| **COMPRESSEUR 2** | | | | | | | | | | | | | | |
| P/P | 15,50 | 15,50 | 15,50 | 15,50 | 15,50 | 15,50 | 15,50 | 15,50 | 15,50 | 15,50 | 15,50 | | 15,50 | 15,50 |
| DVT/P (Kg/sec) | 3,28 | 1,738 | 1,833 | 1,0965 | 1,1115 | 1,1265 | 1,1435 | 1,474 | 0,9905 | 0,967 | 0,9295 | | 1,1435 | 0,983 |
| compressor efficiency | 0,8 | 0,8 | 0,8 | 0,8 | 0,8 | 0,8 | 0,8 | 0,8 | 0,8 | 0,8 | 0,8 | | 0,8 | 0,8 |
| T3 °K | 705 | 705 | 705 | 705 | 705 | 705 | 705 | 705 | 705 | 705 | 705 | | 705 | 705 |
| p/p air assist | | 2,55 | 2,27 | 2,55 | 2,46 | 2,36 | 2,27 | 2,06 | 2,40 | 2,27 | 2,55 | Air Assist 0,1 | 2,27 | 2,04 |
| T/T | | 1,39 | 1,33 | 1,39 | 1,37 | 1,35 | 1,33 | 1,29 | 1,36 | 1,33 | 1,39 | | 1,33 | 1,28 |
| KW air assist | | 85 | 85 | 54 | 54 | 53 | 53 | 65 | 47 | 45 | 46 | | 53 | 43 |
| **TURBINE** | | | | | | | | | | | | | | |
| TIT °K | 1575 | 2500 | 2500 | 2500 | 2500 | 2500 | 2500 | 2200 | 2700 | 2500 | 2500 | | 2500 | 2500 |
| turbine efficiency HP.TL | 0,8 | 0,5 | 0,5 | 0,7 | 0,7 | 0,7 | 0,7 | 0,7 | 0,7 | 0,8 | 0,8 | | 0,7 | 0,7 |
| P4/P5 | 3,77 | 4,07 | 4,06 | 2,61 | 2,61 | 2,61 | 2,6 | 3,03 | 2,41 | 2,29 | 2,29 | | 2,6 | 2,61 |
| P5/P6 | 3,61 | 11,69 | 9,96 | 18,23 | 17,32 | 16,4 | 15,53 | 11,75 | 18,15 | 17,66 | 20,78 | | 15,53 | 13,49 |
| P4 (Bar) | 14,50 | 54,99 | 46,74 | 54,99 | 52,24 | 49,49 | 46,74 | 41,13 | 50,48 | 46,74 | 54,99 | | 46,74 | 40,64 |
| T5 °K | | 2180 | 2180 | 2180 | 2180 | 2180 | 2180 | 1870 | 2385 | 2180 | 2180 | | 2180 | 2177 |
| T6 °K | | 1752 | 1775 | 1493 | 1503 | 1514 | 1523 | 1334 | 1649 | 1398 | 1365 | | 1523 | 1534 |
| Pressure factor | | 1 | 0,85 | 1 | 0,95 | 0,9 | 0,85 | 0,85 | 0,85 | 0,85 | 1 | | 0,85 | 0,85 |
| **PERFORMANCES** | | | | | | | | | | | | | | |
| Wf Kg/hr | 303,85 | 375,51 | 396,04 | 236,91 | 240,15 | 243,39 | 247,06 | 254,39 | 244,40 | 208,93 | 200,83 | | 247,06 | 212,49 |
| KW | 1104 | 1104 | 1104 | 1104 | 1104 | 1104 | 1104 | 1104 | 1104 | 1104 | 1104 | | 1104 | 903 |
| KW with cooling | 1104 | 1019 | 1019 | 1050 | 1050 | 1051 | 1051 | 1039 | 1057 | 1059 | 1053 | | 1051 | 860 |
| SFC g/Kw.h | 275,23 | 340,14 | 358,73 | 214,59 | 217,53 | 220,46 | 223,79 | 230,43 | 221,38 | 189,25 | 181,91 | | 223,79 | 235,32 |
| SFC g/kw.h cooling | 275,21 | 368,60 | 388,63 | 225,58 | 228,61 | 231,61 | 235,03 | 244,81 | 231,24 | 197,23 | 189,75 | | 235,03 | 247,11 |

Chambre PCE

P/P

P4

P5

P6

C ---> Cc
the cycle Cc take into account
the decrease of fresh air mass
due to the residual mass of gas
in the tubes after expansion

**FIG 21**

FIG 22

EP 1 483 489 B1

## With and without cooling

—— P/P8 —— P/P15 —— P/P8 cooled ——P/P15 cooled

♦ P/P8 ■ P/P15

FIG 23